# EUROPEAN PATENT SPECIFICATION

(11) **EP 1 535 361 B1**
(45) Date of publication and mention of the grant of the patent: **12.08.2009**
(21) Application number: 04726811.5
(22) Date of filing: 09.04.2004
(51) Int. Cl.: H01M 8/04

(54) **FUEL CELL ARRANGEMENT AND METHOD OF CONTROLLING A PURGE VALVE IN A FUEL CELL ARRANGEMENT**
BRENNSTOFFZELLENANLAGE UND VERFAHREN ZUM STEUERN EINES ENTLÜFTUNGSVENTILS IN DIESER ANLAGE
DISPOSITIF COMPRENANT UNE PILE A COMBUSTIBLE ET METHODE POUR CONTROLER UNE SOUPAPE DE PURGE DANS CE DISPOSITIF

(30) Priority: 21.05.2003 JP 2003143488
(43) Date of publication of application: 01.06.2005
(73) Proprietor: NISSAN MOTOR CO., LTD., Yokohama-shi, Kanagawa 221-0023 (JP)
(72) Inventor: FUSE, Toru, Yokohama-shi, Kanagawa 220-0024 (JP)
(74) Representative: Grünecker, Kinkeldey, Stockmair & Schwanhäusser Anwaltssozietät
(86) International application number: PCT/JP2004/005158
(87) International publication number: WO 2004/105165

(56) References cited:
- EP-A- 1 187 241
- EP-A- 1 339 125
- EP-A- 1 458 045
- US-A1- 2001 014 415
- PATENT ABSTRACTS OF JAPAN vol. 2002, no. 12, 12 December 2002 (2002-12-12) & JP 2002 231294 A (NISSAN MOTOR CO LTD), 16 August 2002 (2002-08-16)
- PATENT ABSTRACTS OF JAPAN vol. 2003, no. 09, 3 September 2003 (2003-09-03) & JP 2003 151592 A (TOYOTA MOTOR CORP), 23 May 2003 (2003-05-23)
- PATENT ABSTRACTS OF JAPAN vol. 2003, no. 12, 5 December 2003 (2003-12-05) & JP 2003 317752 A (NISSAN MOTOR CO LTD), 7 November 2003 (2003-11-07)

## Description

The present invention relates to a fuel cell arrangement and a method of controlling a purge valve in a fuel cell arrangement

More particularly, to a fuel cell system equipped with a hydrogen circulation system for recirculation of unused hydrogen gas discharged from a hydrogen electrode.

A fuel cell has an electrolyte supplied with fuel gas, such as hydrogen gas, and oxygen containing oxidant gas to cause electrochemical reaction to occur for directly taking out electrical energy from electrodes formed on both surfaces of the electrolyte.
Especially, a solid polymer fuel cell using a solid polymer electrolyte is low in operating temperature and easy to handle and, so, attracts public attention as a power supply for an electric vehicle. A fuel cell powered vehicle is an ultimate clean vehicle, resulting in the formation of only water as an exhaust substance, on which a hydrogen storage unit, such as a high pressure hydrogen tank, a liquid hydrogen tank and a hydrogen absorbing alloy, is installed to supply hydrogen to a fuel cell to which oxygen containing air is also fed for reaction to take out electrical energy from the fuel cell to drive a motor connected to drive wheels.

In order to humidify hydrogen gas or to improve a performance of generating electric power, according to the conventional system with solid polymer fuel cells, in which hydrogen gas is used as fuel, the system includes a hydrogen circulation system in which hydrogen to be consumed for generating electric power is supplied through an inlet of a hydrogen electrode in excess of the quantity of hydrogen and unused hydrogen gas, expelled from an outlet of the hydrogen electrode, is circulated to the inlet of the hydrogen electrode again.

With the fuel cell equipped with such a hydrogen circulation system, impurities which is contained in supplied hydrogen gas, and nitrogen gas which is contained in air leaked from the oxidant electrode via the electrolyte accumulate in the hydrogen circulation system. In this case, if the quantity of nitrogen accumulated in the hydrogen circulation system increases in excess, the fuel cell suffers from deterioration, and therefore purging is executed to discharge the impurities, such as nitrogen, accumulated in the hydrogen circulation system to the outside of the system.

Japanese Patent Publication No. 2002-231293 (on Page 5 and in FIG. 1) shows conventional purging technologies. According to such technology, a purge valve is controlled so that being opened at predetermined time intervals.

However, due to the operation of causing out the purging at given time intervals without depending upon the amount of nitrogen accumulated in the hydrogen circulation system, the related art technology set forth above encounters an issue in which undesired discharging of hydrogen gas from the hydrogen circulation system takes place with resultant deterioration in a fuel conserving performance of the fuel cell.

EP 1 187 241 A2 discloses a fuel cell with a hydrogen supply passage and a hydrogen recirculation passage for re-circulating hydrogen expelled from the anode chamber of a fuel cell stack. A exhaust valve connects the anode effluent recirculation passage via a discharge passage to a combustor. A separate hydrogen sensor is arranged in front of the recirculation pump within the anode effluent recirculation passage. A first pressure sensor is arranged on the post-separation side of a membrane hydrogen separator, and a second pressure sensor is arranged on the pre-separation side of said membrane hydrogen separator. A controller operates an intake valve and a discharge valve based on detection signals from these sensors in order to maintain the hydrogen partial pressure on the post-separation side of the membrane hydrogen separator at a target value.

US 2001/0014415 A1 discloses a fuel cell system, wherein a control unit receives inputs from a cell voltage monitor detecting output voltage produced by a fuel cell and a CO-sensor. Said CO-sensor is arranged between a humidifier and a fuel cell stack.

It is an objective of the present invention to provide a fuel cell arrangement and a method of controlling a purge valve in a fuel cell arrangement which are capable of reducing the frequency of purging operations.

According to an apparatus aspect of the present invention, said objective is solved by a fuel cell arrangement having the combination of features of independent claim 1.

According to a method aspect of the present invention, said objective is solved by a method having the combination of features of independent claim 11.

Preferred embodiments of the present invention are laid down in the subclaims.

In the following, the present invention is explained in greater detail by means of embodiments thereof in conjunction with the accompanying drawings, wherein:
FIG. 1. is a system structural view illustrating a structure of a fuel cell system of a first embodiment.
FIG 2 is a flowchart illustrating how control is executed in the first embodiment.
FIG 3A is a view illustrating the relationship between a quantity of nitrogen accumulated in a hydrogen circulation path and load of hydrogen-circulation-device in the first embodiment.
FIG 3B is a view illustrating the relationship between the quantity of nitrogen accumulated in the hydrogen circulation path and a voltage of a fuel cell at constant power output thereof in the first embodiment.
FIG 4 is a view illustrating the relationship between load hydrogen circulation device and the voltage of the fuel cell at constant power output thereof in the first embodiment
FIG 5 is a view illustrating variation in the quantity of accumulated nitrogen in terms of continuous time for a purge valve to be closed in the first embodiment.
FIG 6 is a system structural view illustrating a structure of a fuel cell system of a second embodiment.
FIG 7 is a main flowchart illustrating how control is executed in the second embodiment.
FIG. 8 is a detailed flowchart illustrating how control is executed in the second embodiment.
FIG. 9 is a detailed flowchart illustrating how control is executed in the second embodiment.
FIG. 10 is a view illustrating a given value for use in discriminating whether to execute purge start or purge end in the second embodiment.
FIG. 11 is a system structural view illustrating a structure of a fuel cell system of a third embodiment .
FIG 12 is a detailed flowchart illustrating how control is executed in the third embodiment.
FIG 13 is a view illustrating a nitrogen-quantity estimating table to be used in the third embodiment.
FIG 14 is a detailed flowchart illustrating how control is executed in the third embodiment.
FIG 15 is a view illustrating a nitrogen-quantity judgment value in the third embodiment.
FIG 16 is a system structural view illustrating a structure of a fuel cell system of a fourth embodiment.
FIG 17 is a flowchart illustrating how control is executed in the fourth embodiment.
FIG 18 is a timing chart illustrating how control is executed in the fourth embodiment.
FIG 19 is a system structural view illustrating a structure of a fuel cell system of a fifth embodiment.
FIG. 20 is a view illustrating the relationship between a target rotational speed and the quantity of fuel cell power output in the fifth embodiment.
FIG. 21 is a flowchart illustrating how control is executed in the fifth embodiment.
FIG 22 is a view illustrating the relationship between the target rotational speed and target load in the fifth embodiment.
FIG 23 is a flowchart illustrating how control is executed in the fifth embodiment.
FIG 24 is a flowchart illustrating how control is executed in the fifth embodiment.
FIG 25 is a view illustrating a given value for use in load judgment in the fifth embodiment.
FIG 26 is a system structural view illustrating a structure of a fuel cell system of a sixth embodiment.
FIG 27 is a schematic flowchart illustrating how control is executed in the sixth embodiment.
FIG 28 is a flowchart illustrating how control is executed in the sixth embodiment.
FIG 29 is a timing chart illustrating how control is executed in the sixth embodiment.
FIG 30 is a view illustrating a learning area table to be used in the sixth embodiment.
FIG 31 is a view illustrating a stack voltage table for use in control of the sixth embodiment.
FIG 32 is a view illustrating a load-increment-by-area learned value table for use in control of the sixth embodiment.
FIG. 33 is a view illustrating a status indicative of how load of the hydrogen circulation device is learned in the sixth embodiment.
FIG 34 is a flowchart illustrating how control is executed in the sixth embodiment.
FIG 35 is a flowchart illustrating how control is executed in the sixth embodiment.
FIG 36 is a flowchart illustrating how control is executed in the sixth embodiment.
FIG 37 is a view illustrating a method of referring to a leaned value in the sixth embodiment.
FIG 38 is a flowchart illustrating how control is executed in the sixth embodiment.
FIG 39 is a system structural view illustrating a structure of a fuel cell system of a seventh embodiment.
FIG 40 is a flowchart illustrating how control is executed in the seventh embodiment.
FIG 41 is a system structural view illustrating a structure of a fuel cell system of an eighth embodiment.
FIG 42 is a flowchart illustrating how control is executed in the eighth embodiment.
FIG 43 is a system structural view illustrating a structure of a fuel cell system of a ninth embodiment.
FIG 44 is a view illustrating the relationship between hydrogen supply pressure and internal pressure of the hydrogen circulation path in the ninth embodiment.
FIG 45 is a view illustrating the relationship between internal pressure of the hydrogen circulation device and load of hydrogen circulation device in the ninth embodiment.
FIG 46 is a system structural view illustrating a structure of a fuel cell system of a tenth embodiment.
FIG 47 is a view illustrating the relationship between ambient temperature and steam partial pressure in the tenth embodiment.
FIG 48 is a view illustrating the relationship between steam partial pressure and load of the hydrogen circulation device in the tenth embodiment.

With reference to drawings, embodiments are described in detail.

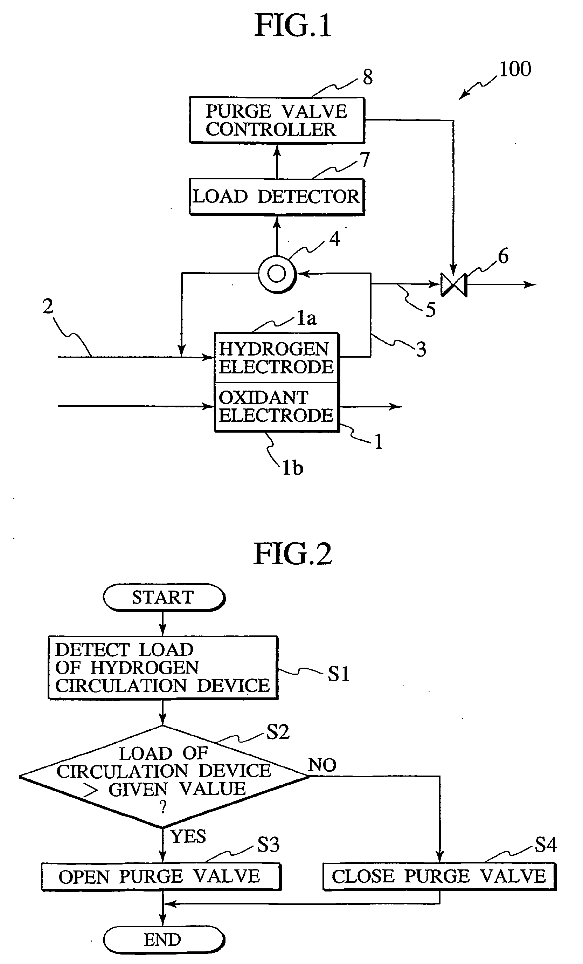

With reference to FIG 1, a fuel cell system 100 of a first embodiment will be described below. As shown in FIG 1, the fuel cell system 100 is comprised of a fuel cell 1 having a hydrogen electrode 1a and an oxidant electrode 1b, a hydrogen gas supply passage 2 through which hydrogen is supplied to the hydrogen electrode 1a, a hydrogen gas circulation passage 3 forming a path through which hydrogen gas is circulated from an outlet of the hydrogen electrode 1a to an inlet thereof, a hydrogen circulation device 4 including a pump that circulates hydrogen gas from the outlet of the hydrogen electrode 1a to the inlet thereof through the hydrogen circulation passage 3, a purge passage 5 through which the hydrogen gas circulation passage 3 is in communication with the outside, a purge valve 6 that opens or closes the purge passage 5, a load detector 7 that detects load of the hydrogen circulation device 4, and a purge valve controller 8 that controls to open or close the purge valve 6.

The load detector 7 detects load of the hydrogen circulation device 4 based on torque detected by a torque sensor, and electric power consumption and electric current consumption of the hydrogen circulation device 4, and a detected value is outputted to the purge valve controller 8.

Although, there are many configuration of the controller 8, for example, in the presently filed embodiment, the purge valve controller 8 is comprised of a microprocessor including a CPU, a ROM that stores programs and control constants, a RAM for processing, and an I/O interface. Additionally, the load detector 7 (an input unit) and the purge valve 6 (an output unit) are connected to the controller 8 accordingly.

Substantially, referring to FIGS. 2 to 5, the operation of the purge valve controller 8 is described.

In FIG 2, in step (hereinafter, step is abbreviated as S) 1, the load of the hydrogen circulation device 4 resulting from the load detector 7 is inputted to the purge valve controller 8. In next S2, discrimination is made to find whether a detected load of the hydrogen circulation device 4 being controlled to rotate at a fixed speed, exceeds a given value. In particular, the hydrogen circulation means (such as a pump), not shown, constituting the hydrogen circulation device 4 is controlled to rotate at the fixed speed. Since hydrogen is lighter than nitrogen, the load under which the hydrogen circulation device 4 is rotated at the fixed speed is small if a quantity of hydrogen is greater than that of nitrogen in the hydrogen circulation passage 3, and on the contrary, the load under which the hydrogen circulation device 4 is rotated at the fixed speed is large if the quantity of nitrogen is greater than that of hydrogen. Therefore, measuring the load of the hydrogen circulation device 4 enables the quantities of hydrogen and nitrogen present in the hydrogen circulation passage 3 to be estimated.

If the load of the hydrogen circulation device 4 exceeds the given value, then judgment is made that a quantity of nitrogen accumulated in the hydrogen circulation system as reached to a level that needs to be purged and operation is routed to S3, where the purge valve 6 is opened. In judgment in S2, if the load is less than the given value, operation is routed to S4 where the purge valve 6 is kept closed.

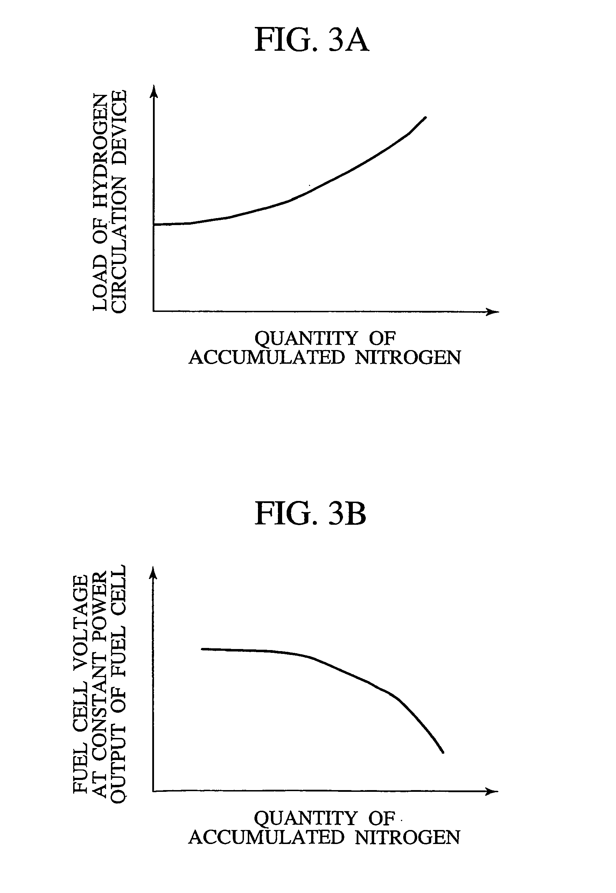

Here, the given value for use in judgment in S2 can be obtained in a manner described below. As shown in FIG. 3A, there is a tendency in that as the quantity of nitrogen, that is large in mass per unit volume, increases in the hydrogen electrode 1a, the hydrogen circulation passage 3 and the hydrogen circulation device 4 (these component parts will be referred to in combination as a hydrogen circulation system), the amount of work (load) required for the hydrogen circulation device 4 rotating at a certain speed to circulate gas increases.

On the contrary, as shown in FIG 3B, as the quantity of nitrogen accumulated in the hydrogen electrode 1a and the hydrogen circulation passage 3 increases, generally, shortage occurs in the quantity of hydrogen supplied to an electrolyte membrane of the hydrogen electrode 1a, resulting in drop in an output voltage of the fuel cell.

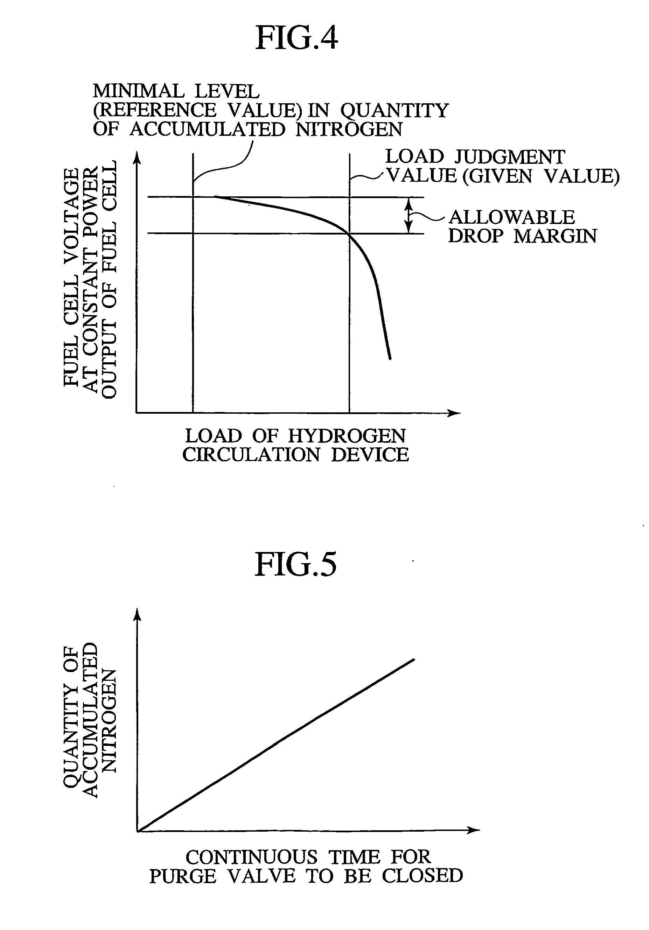

The relationship set forth above is coordinated as shown in FIG. 4. As will be understood from this figure, as the load on the hydrogen circulation device 4 exceeds a certain value (a load judgment value), the output voltage of the fuel cell rapidly drops. By using the load on the hydrogen circulation device 4 at which the quantity of accumulated nitrogen lies at a minimal value as a reference, a minimal fuel cell voltage that can be allowable in operation in the presently filed embodiment is determined. Subsequently, in view of the relationship shown in FIG 4, operation is executed to obtain load of the hydrogen circulation device 4 associated with a resulting voltage level of the fuel cell, and the resulting load of the hydrogen circulation device 4 is set to be a given value (a load judgment given value) in S2.

Also, as shown in FIG 5, in general, as the operation of the fuel cell 1 is continued to generate electric power with the purge valve 6 remaining closed, nitrogen continues to accumulate in the hydrogen electrode 1a. For this reason, taking records of the fuel cell voltage and load of the hydrogen circulation device 4 with the purge valve 6 reamining closed can obtain the relationship shown in FIG 4.

With the presently filed embodiment, since purging is executed depending upon the amount of nitrogen which is accumulated inside the hydrogen circulation passage 3, undesired number of times for purging to be executed is reduced and wasteful discharge of fuel composed of hydrogen gas can be protected, enabling the fuel cell to have an improved fuel saving performance.

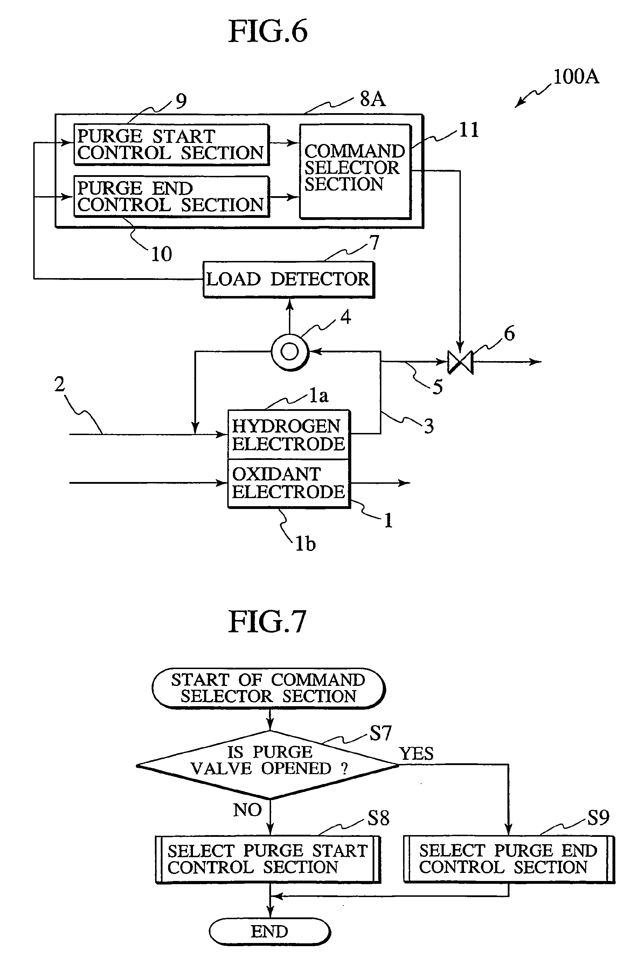

Referring to FIG. 6, a fuel cell system 100A of a second embodiment is described. As shown in FIG 6, the fuel cell system 100A is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, the load detector 7 that detects load of the hydrogen circulation device 4, and a purge valve controller 8A that controls to open or close the purge valve 6.

The load detector 7 detects load of the hydrogen circulation device 4 in terms of torque detected by the torque sensor, and electric power consumption and electric current consumption of the hydrogen circulation device 4, and the detected value is outputted to the purge valve controller 8A.

The purge valve controller 8A is comprised of a purge start control section 9 that controls a timing at which the purge valve 6 is opened, a purge end control section 10 that controls a timing at which the purge valve 6 is closed, and a command selector section 11 that selects which of the purge start control section 9 or the purge end control section 10 is to be activated for controlling the purge valve 6.

Although, there are many configuration of the controller 8, for example, in the presently filed embodiment, the purge valve controller 8A is comprised of a microprocessor including a CPU, a ROM that stores programs and control constants, a RAM for processing, and an I/O interface. Additionally, the load detector 7 (an input unit) and the purge valve 6 (an output unit) are connected to the controller 8A accordingly.

Next, referring to FIGS. 7 to 10, the operation of the purge valve controller 8A of the presently filed embodiment is described.

Referring to FIG 7, the command selector section 11 operates in S7 to discriminate to find whether the purge valve 6 is opened, and if the purge valve 6 is closed, operation is routed to S8 where the purge start control section 9s is activated whereas if judgment in S7, the purge valve is opened, operation is routed to S9 where the purge end control section 10 is activated.

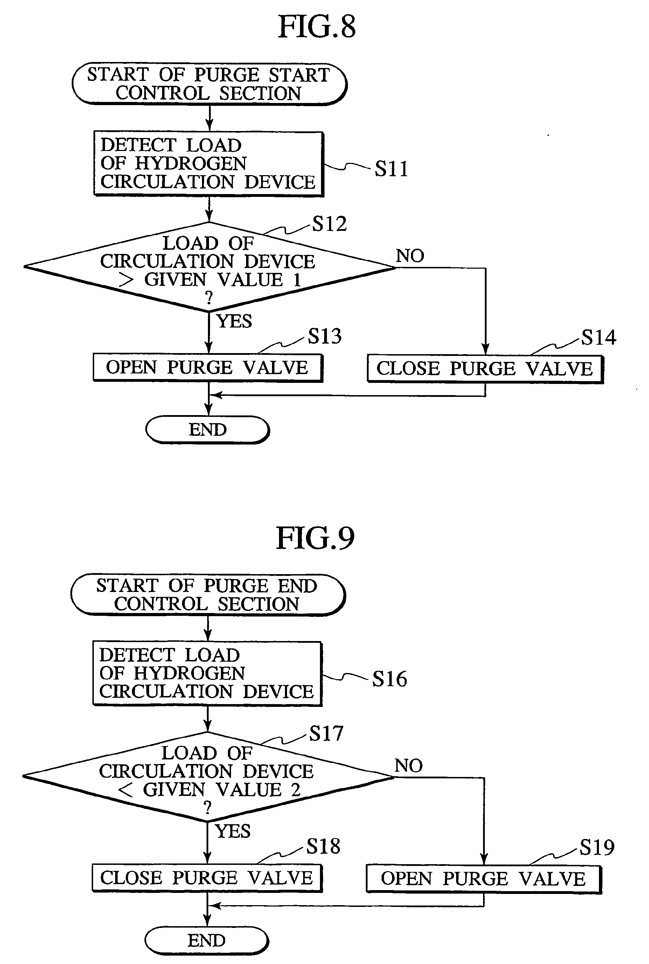

In case where purging is commenced as shown in FIG. 8, the purge start control section 9 executes in S11 to input the load of the hydrogen circulation device 4 detected by the load detector 7 in S7 to the purge valve controller 8A. In succeeding S12, discrimination is made to find whether a detected load of the hydrogen circulation device 4 that is controlled to rotate at a fixed speed exceeds a given value 1 that will be described later. If the detected load exceeds the given value 1, then judgment is made that a quantity of nitrogen accumulated in the hydrogen circulation system has reached to a level that needs the purging to be made and operation is routed to S13, where the purge valve 6 is opened.

Further, if in judgment in S12, the detected load is less than the given value, operation is routed to S14 where the purge valve 6 is kept closed.

Additionally, if the purging is terminated as shown in FIG. 9, the purge end control section 10 inputs the load of the hydrogen circulation device 4 detected by the load detector 7 in S16 to the purge valve controller 8A. In subsequent S17, discrimination is made to find whether the detected load of the hydrogen circulation device 4 that is controlled to rotate at the fixed speed is less than a given value 2 that will be described later. If the detected load is less than the given value 2, then the purge end control section 10 discriminates that the purging of the hydrogen circulation system is terminated and operation is routed to S18, where the purge valve 6 is closed. If judgment in S17 is made that the detected load exceeds the given value 2, operation is routed to S19 and the purge end control section 10 operates to cause the purge valve 6 to be continuously kept opened.

Also, in the second embodiment, the relationship between the load of the hydrogen circulation device 4 and the given value 1 and the given value 2 is similar to those of the principles shown in FIGS. 3A, 3B and FIG 4.

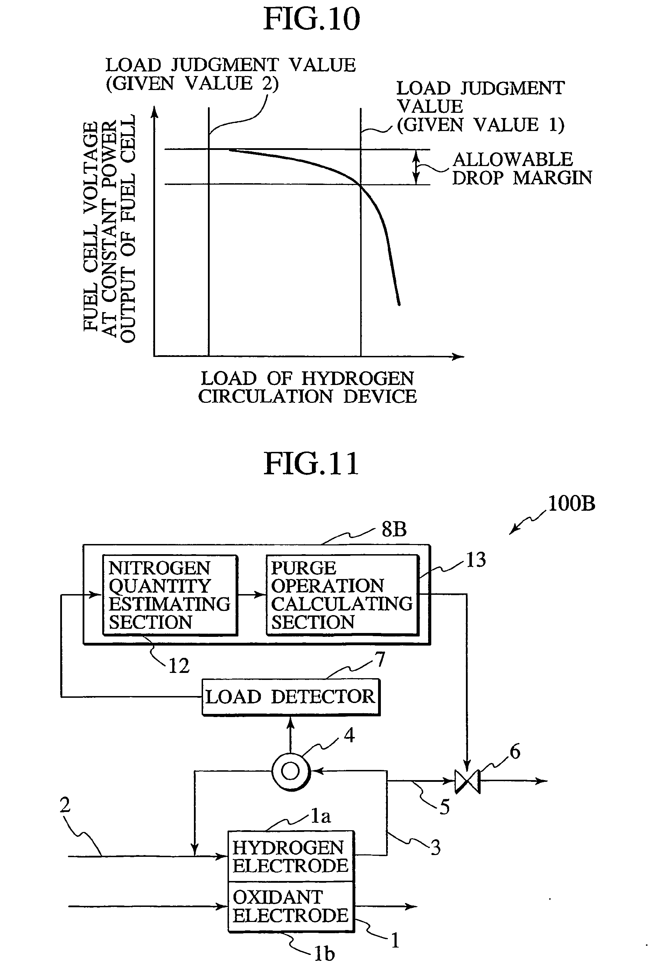

An example of technology for setting the given values 1 and 2 is illustrated in FIG. 10. The given value 1 represents an upper limit of the load of the hydrogen circulation device 4 where a drop margin of the fuel cell voltage caused when the load of the hydrogen circulation device 4 increases is unquestionable, and the given value 2 represents the load of the hydrogen circulation device 4 at a minimal level in the quantity of accumulated nitrogen.

With the first embodiment previously set forth above, only one given value has been used for discriminating the load of the hydrogen circulation device 4 with a view to executing judgment to find whether to open or close the purge valve 6. However, if only one judgment value on which the load of the hydrogen circulation device 4 is discriminated is used, a probability occurs in that a hunting phenomenon takes place in opening or closing controls of the purge valve 6 when the load of the hydrogen circulation device 4 lies at a value close proximity of the judgment value whereby noises occur in operation of the purge valve 6 and deterioration occurs in the purge valve 6.

The purge valve controller 8A of the second embodiment is configured to have a hysteresis on judgment to find whether to open or close the purge valve 6 in terms of differential values between the load value (given value 1) of the hydrogen circulation device 4 upon which judgment is made to open the purge valve 6 and the load value (given value 2: given value 2 < given value 1) of the hydrogen circulation device 4 upon which judgment is made to close the purge valve 6. For this reason, the second embodiment is possible to avoid a hunting phenomenon during opening and closing control of the purge valve 6 and to lower operational noises of the purge valve 6, while enabling protecting the purge valve 6 from deterioration to extend life thereof.

Referring to FIG 11, a fuel cell system 100B of a third embodiment is described. As shown in FIG 11, the fuel cell system 100B is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, the load detector 7 that detects load of the hydrogen circulation device 4, and a purge valve controller 8B that controls to open or close the purge valve 6.

The load detector 7 detects load of the hydrogen circulation device 4 in terms of torque detected by the torque sensor, and electric power consumption and electric current consumption of the hydrogen circulation device 4, and the detected value is outputted to the purge valve controller 8B.

The purge valve controller 8B is comprised of a nitrogen quantity estimating section 12 that estimates a quantity of nitrogen present in the hydrogen circulation system depending upon the load of the hydrogen circulation device 4 detected by the load detector 7, and a purge operation calculating section 13 that controls whether to open or close the purge valve 8 depending upon an estimated result of the nitrogen quantity estimating section 12.

Although, there are many configuration of the controller 8B, for example, in the presently filed embodiment, the purge valve controller 8B is comprised of a microprocessor including a CPU, a ROM that stores programs and control constants, a RAM for processing, and an I/O interface. Additionally, the load detector 7 (an input unit) and the purge valve 6 (an output unit) are connected to the controller 8B accordingly.

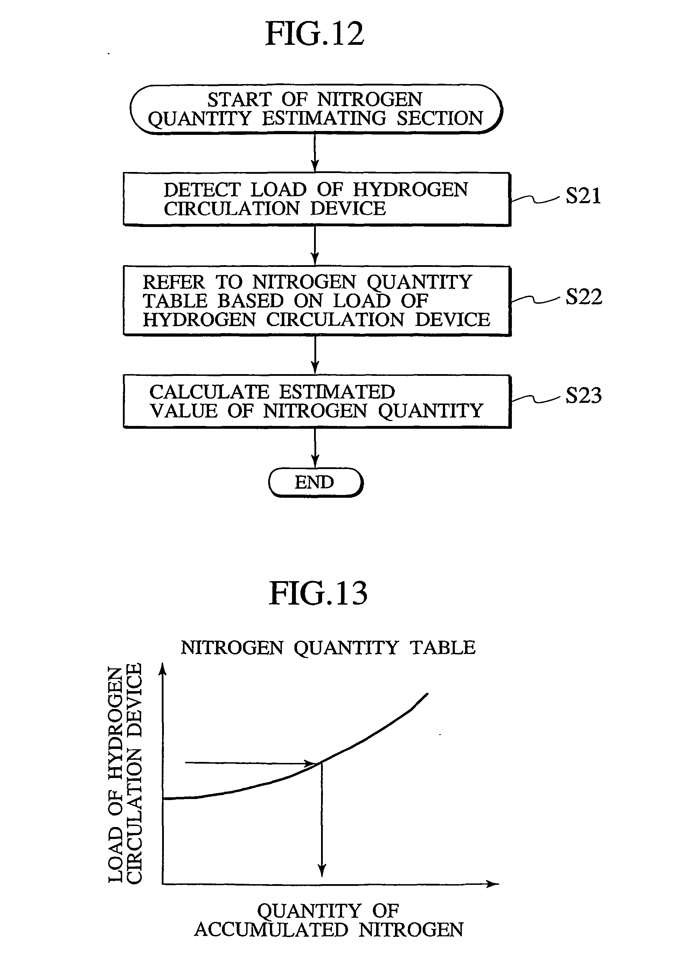

Referring to FIGS. 12 to 15, the operation of the purge valve controller 8B of the presently filed embodiment is described.

In FIG. 12, resulting load of the hydrogen circulation device 4 detected by the load detector 7 is inputted in S21 to the nitrogen quantity estimating section 12 where in S22, the quantity of accumulated nitrogen corresponding to detected load of the hydrogen circulation device 4 is estimated. In particular, the nitrogen quantity estimating section 12 is possible to derive an estimated value of the quantity of accumulated nitrogen from a graph (see FIG 13) wherein load resulting from preliminary experiments is plotted in terms of the quantity of accumulated nitrogen. The nitrogen quantity estimating section 12 stores the estimated nitrogen quantity value in a given memory region to allow the purge operation calculating section 13 to refer to the estimated value of the quantity of accumulated nitrogen in S23.

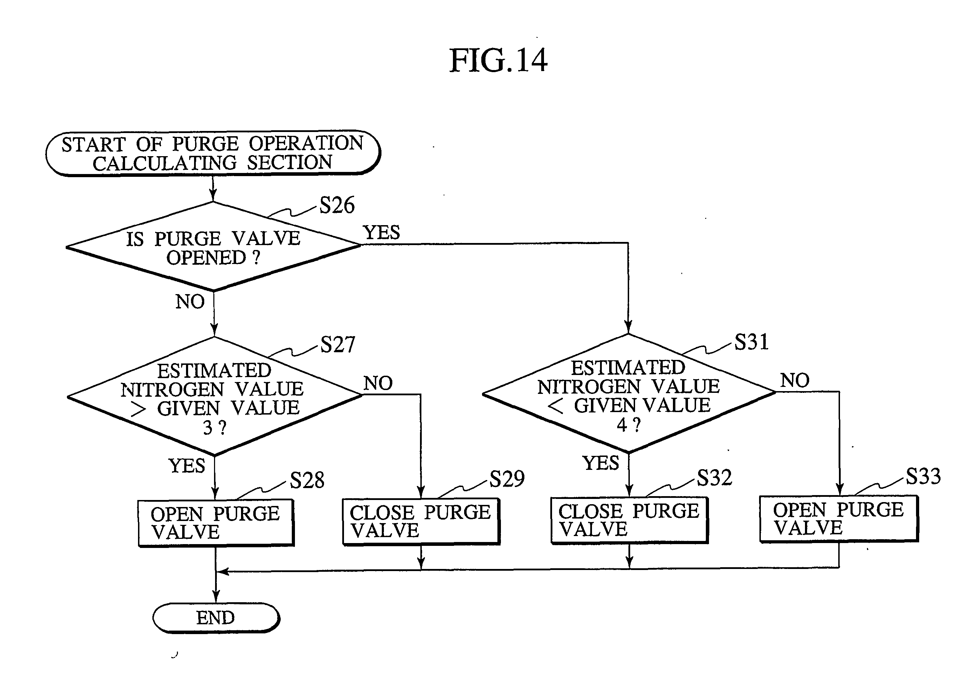

Next, the purge operation calculating section 13 executes purge operation depending upon the estimated nitrogen quantity derived from the nitrogen quantity estimating section 12 in accordance with a flowchart shown in FIG 14. First, in S26, discrimination is made to find whether the purge valve 6 is opened or closed. If the purge valve 6 is closed, then judgment is made that the purge operation remains in a stopped state, and operation is routed to S27. If the purge valve 6 is opened, then operation is routed to S31.

In S27, discrimination is made to find whether the estimated nitrogen quantity value derived from the nitrogen quantity estimating section 12 exceeds a given value 3. If the estimated nitrogen quantity value is found to exceed the given value 3, operation is routed to S28 where the purge valve 6 is opened. If, in judgment in S27, the estimated nitrogen quantity value is found to be less the given value 3, operation is routed to S29 where a closed state of the purge valve 6 is maintained.

On the other hand, discrimination is made in S31 to find whether the estimated nitrogen quantity derived from the nitrogen quantity estimating section 12 is less than a given value 4 (given value 4 < given value 3), and if the estimated nitrogen quantity is less than the given value 4, operation is routed to S32 where the purge valve 6 is closed to terminate purge operation. If, in judgment in S31, the estimated nitrogen quantity exceeds the given value 4, operation is routed to S33 where the purge valve 6 is maintained in an opened status to continue purge operation.

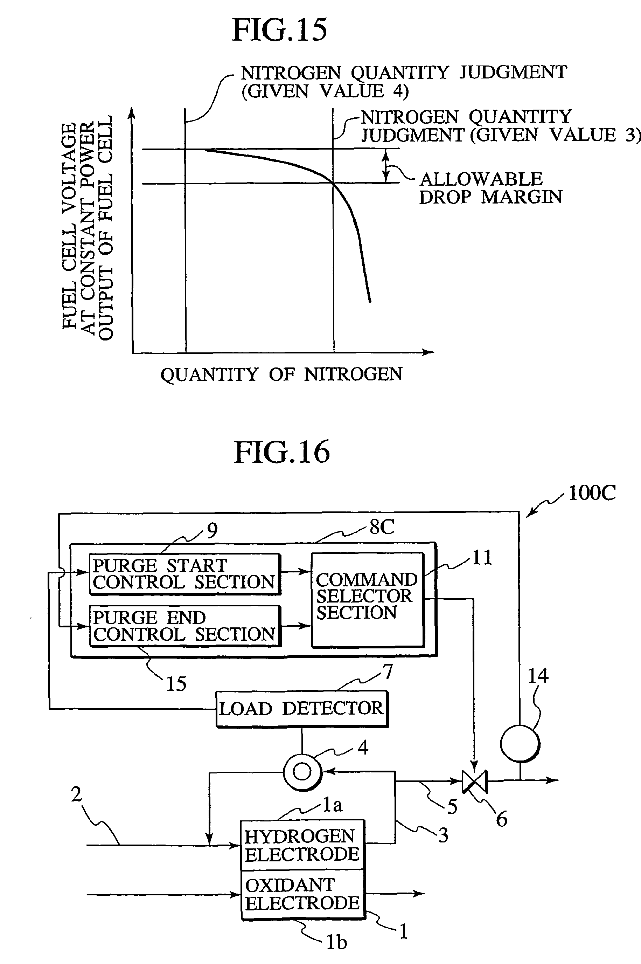

An example of setting the given values 3 and 4 is illustrated in FIG. 15. An upper limit of the quantity of nitrogen at which a fuel cell voltage drops by a margin that is unquestionable in view of the relationship between the quantity of nitrogen and the fuel cell voltage is set to be the given value 3, and a mean value of the quantity of nitrogen that is present in a normally usable range is set to be the given value 4.

With the presently filed embodiment, since the purge operation is executed based on the estimated nitrogen quantity value, an advantageous effect resides in that it is easy to set a timing at which the purging is executed.

Referring to FIG 16, a fuel cell system 100C of a fourth embodiment is described. As shown in FIG 16, the fuel cell system 100C is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, the load detector 7 that detects load of the hydrogen circulation device 4, a purge valve controller 8C that controls to open or close the purge valve 6, and a hydrogen concentration detector 14 that detects a hydrogen concentration at a downstream of the purge valve 6.

The load detector 7 detects load of the hydrogen circulation device 4 in terms of torque detected by the torque sensor, and electric power consumption and electric current consumption of the hydrogen circulation device 4, and the detected value is outputted to the purge valve controller 8C.

The purge valve controller 8C is comprised of the purge start control section 9 that controls purge-start based on load of the hydrogen circulation device 4 detected by the load detector 7, a purge end control section 15 that controls purge-end based on the detected result of the hydrogen concentration detector 14, and the command selector section 11. The purge start control section 9 and the command selector section 11 are the same component parts as those of the second embodiment shown in FIG. 6.

Although, there are many configuration of the controller 8C, for example, in the presently filed embodiment, the purge valve controller 8C is comprised of a microprocessor including a CPU, a ROM that stores programs and control constants, a RAM for processing, and an I/O interface. Additionally, the load detector 7 (an input unit) and the purge valve 6 (an output unit) are connected to the controller 8C accordingly.

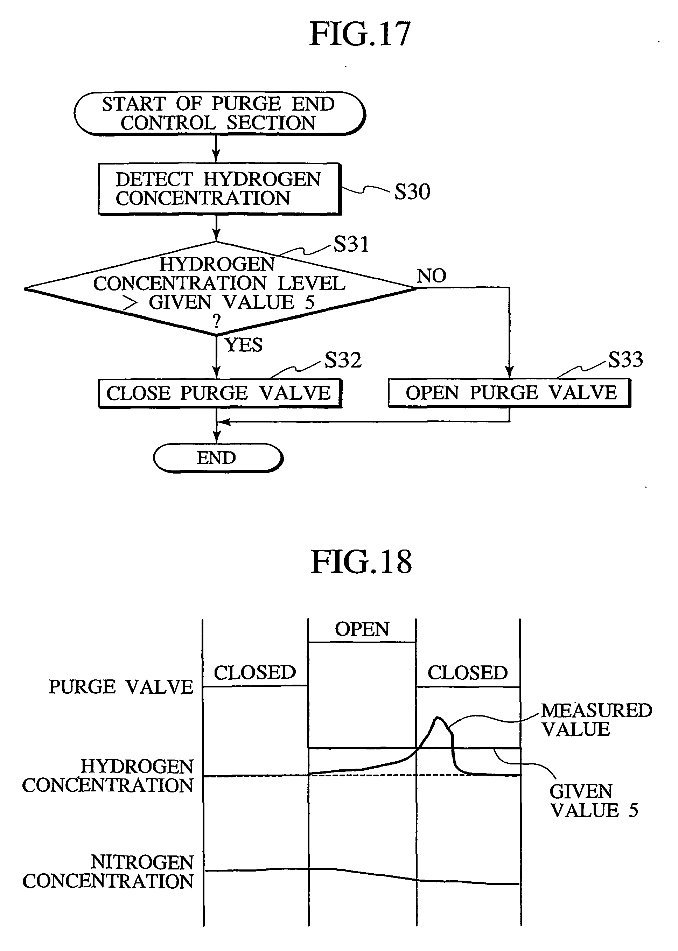

Referring to FIGS. 17 and 18, the operation of the purge valve controller 8C of the presently filed embodiment is described.

Also, in the presently filed embodiment, the purge start control section 9 and the command selector section 11 operates in the same manner as those of the second embodiment and, so, description of these component elements is omitted herein, while description is made of the hydrogen concentration detector 14 and the purge end control section 15 that are different from the second embodiment.

Referring to FIG. 17, a hydrogen concentration detected by the hydrogen concentration detector 14 is inputted to the purge end control section 15 in S30. In succeeding S31, discrimination is made to find whether a hydrogen concentration value inputted in S31 exceeds a given value 5. If in judgment in S31, the hydrogen concentration value exceeds the given value 5, then judgment is made that discharging of impurities from the hydrogen circulation system has been terminated, and operation is routed to S32 where the purge valve 6 is closed to terminate the purging. Also, if in judgment in S31, the hydrogen concentration value is less than the given value 5, then the purge end control section 15 continues discharging of impurities from the hydrogen circulation system, and operation is routed to S33 where the purge valve 6 is kept open to continue the purging.

Also, as shown in FIG. 18, a delay of several tens milliseconds (ms) to several seconds (s) occurs before hydrogen reaches to a position of the hydrogen concentration detector 14 after commencing the purging, and the purging is terminated at a timing at which the hydrogen concentration value reaches to the given value 5. Also, a graph of FIG 18 indicative of the nitrogen concentration represents transitive variation in the nitrogen concentration that is estimated from the measured hydrogen concentration. This graph demonstrates that the nitrogen concentration, which continues to increase prior to the purging, begins to progressively decrease after commencing the purging, and the purging is terminated when estimated that the nitrogen concentration reaches to a given concentration.

Moreover, upon preliminary experiments, variation in the nitrogen concentration associated with a hydrogen outflow concentration resulting from the purging is recorded, and an allowable nitrogen concentration is preliminarily discovered. Accordingly, with the presently filed embodiment, a value of the hydrogen concentration associated with the allowable nitrogen concentration, set forth above, is set to be the given value 5.

With the presently filed embodiment, since the purge valve 6 is closed depending upon a quantity of actual outflow hydrogen resulting from the purge operation, an advantageous effect resides in that even when the quantity of outflow hydrogen varies in dependence on environmental variation, the quantity of outlfow hydrogen can be minimized while reliably executing the purging.

The first to fourth embodiments set forth above have been described with reference to an example where electric power output (hereinafter referred to as stack power output) generated by the fuel cell stack is constant. In actual practice, target load associated with stack power output differs in dependence on a variety of conditions. Hereunder, a fifth embodiment is described in conjunction with an example where such conditions are taken into consideration.

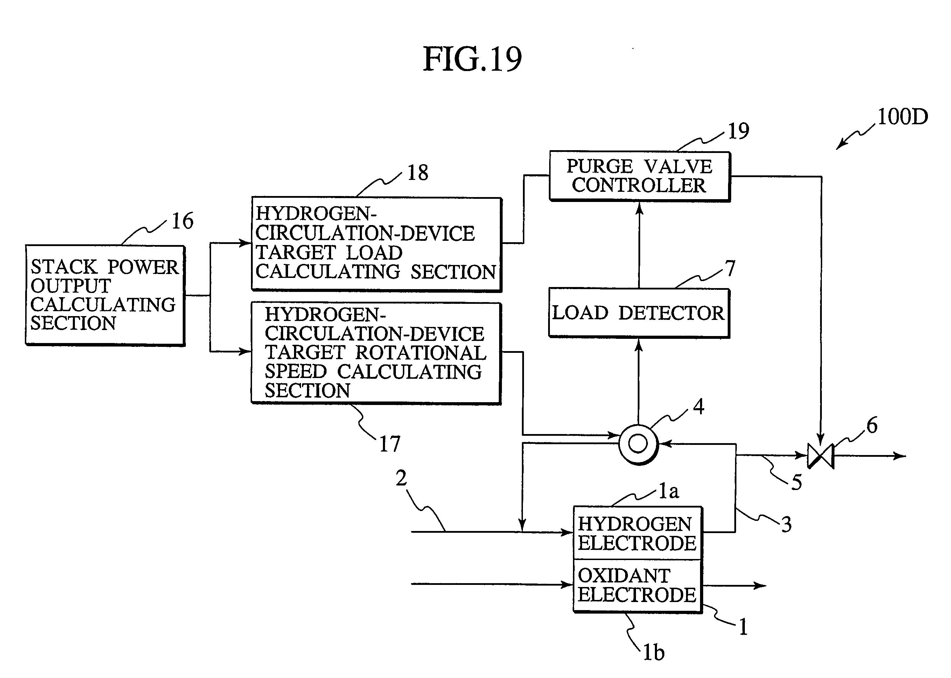

Referring to FIG. 19, a fuel cell system 100D of a fifth embodiment is described. As shown in FIG. 19, the fuel cell system 100D is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, the load detector 7 that detects load of the hydrogen circulation device 4, a stack power output calculating section 16 that calculates electric power output generated by the fuel cell 1, a hydrogen-circulation-device target rotational speed calculating section 17 that calculates a target rotational speed of the hydrogen circulation device 4 depending upon calculated electric power output, a hydrogen-circulation-device target load calculating section 18 that calculates a target load of the hydrogen circulation device 4 depending upon calculated electric power output, and a purge valve controller 19 that controls to open or close the purge valve 6 depending upon the target load of the hydrogen circulation unit 4 and the load of the hydrogen circulation unit 4 detected by the load detector 7.

The load detector 7 detects load of the hydrogen circulation device 4 in terms of torque detected by the torque sensor, and electric power consumption and electric current consumption of the hydrogen circulation device 4, and the detected value is outputted to the purge valve controller 19.

Although no specific limitation is intended in the presently filed embodiment, the stack power output calculating section 16, the hydrogen-circulation-device target rotational speed calculating section 17, the hydrogen-circulation-device target load calculating section 18 and the purge valve controller 19 are comprised of a microprocessor including a CPU, a ROM that stores programs and control constants, a RAM for processing, and an I/O interface. And, the load detector 7, which serve as an input unit, and the purge valve 6 that serves as an output unit are connected to the microprocessor, respectively.

The stack power output calculating section 16 shown in FIG 19 serves as a calculating section that computes electric power output currently generated by the stack. An electric current value and a voltage value of electric power output generated by the fuel cell 1 are applied to the stack power output calculating section 16 by which multiplication of these components is executed to compute stack power output.

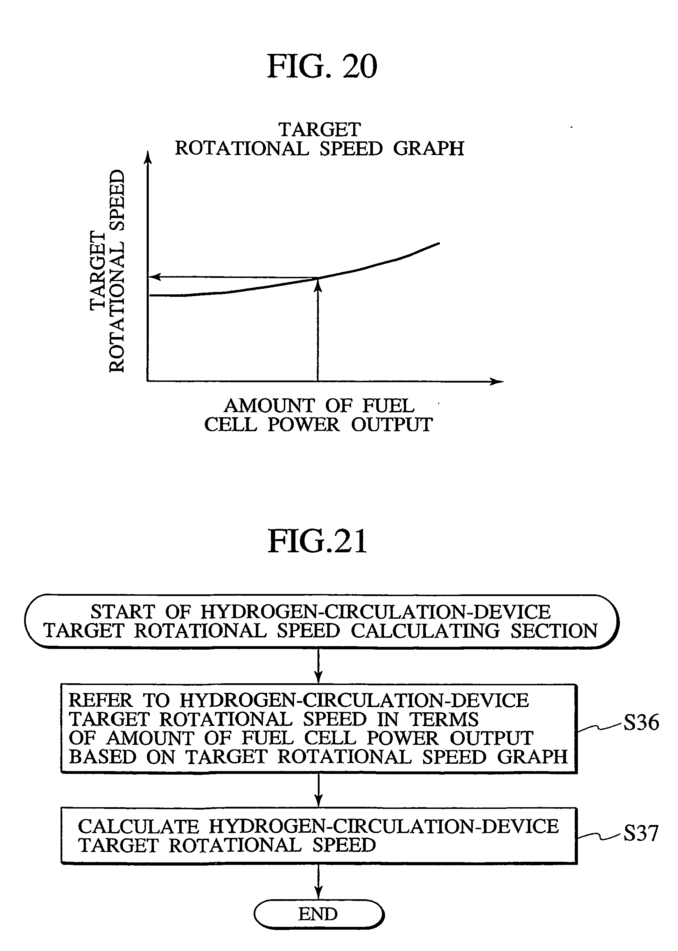

As shown in FIG. 20, the relationship between an amount of electric power output generated by the fuel cell 1 and the target rotational speed is preliminarily discovered from experiments, and such a relationship is preliminarily stored in a memory.

As shown in FIG. 21, the hydrogen-circulation-device target rotational speed calculating section 18 determines the target rotational speed, associated with a stack power output level calculated from the above computation, by referring to a graph of FIG. 20.

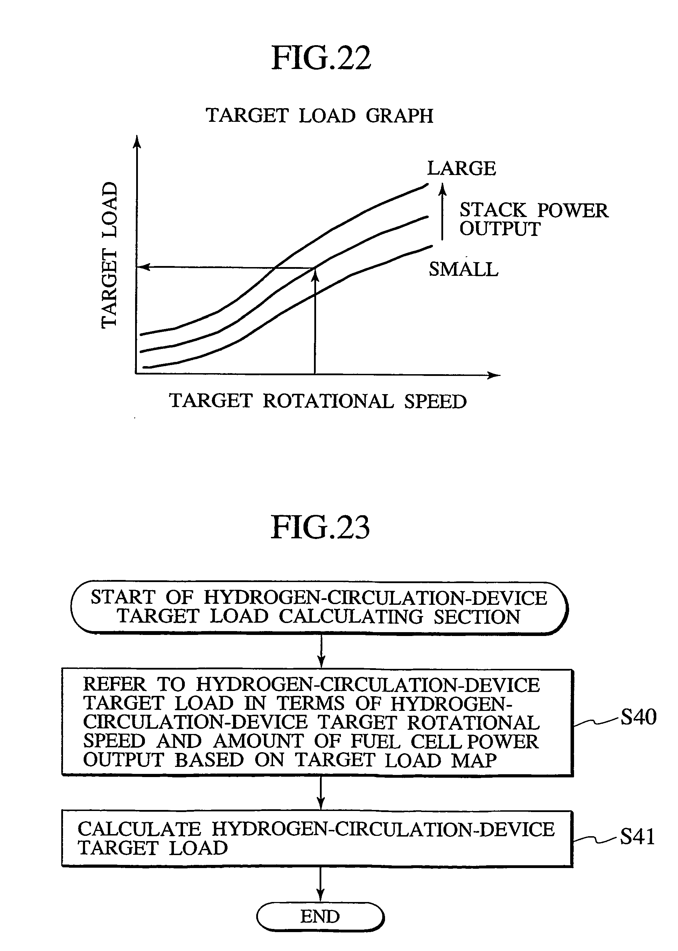

Also as shown in FIG. 22, the relationships between the target rotational speed and the target load are preliminarily discovered from experiments for each stack power output.

Next, as shown in FIG 22, the hydrogen-circulation-device target load calculating section 17 determines target load, associated with the target rotational speed derived in S37, by referring to a graph of FIG. 22. Through these operations heretofore mentioned, target loads associated with current amounts of electric power output generated by the fuel cell 1 are obtained for respective stack power outputs.

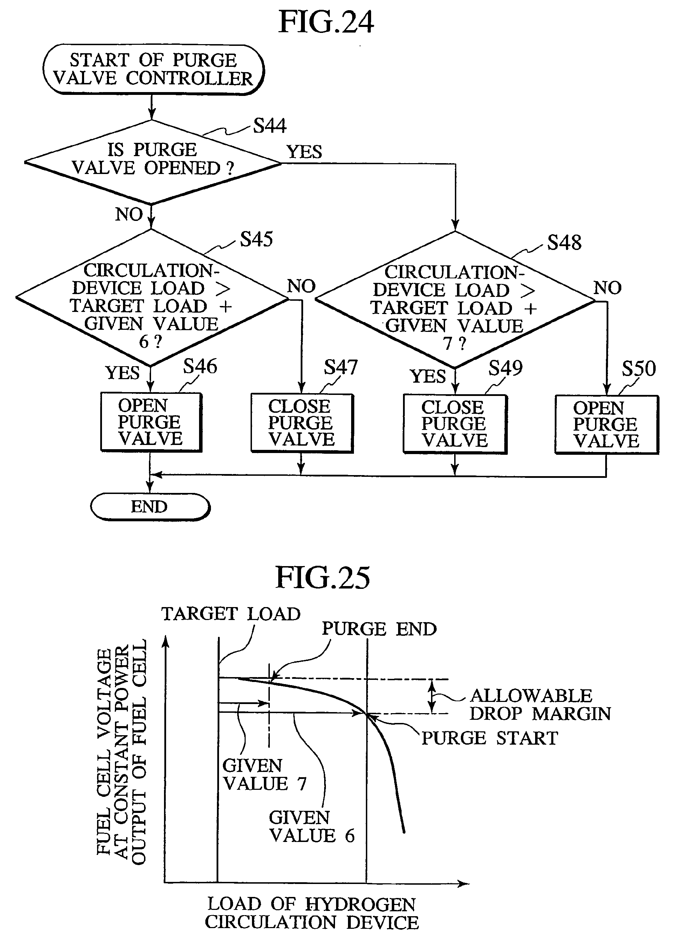

Next, opening and closing states of the purge valve 6 are controlled depending upon a flowchart of the purge valve controller 19 shown in FIG 24. In S44, discrimination is made to find the opening and closing states of the purge valve 6, and if the purge valve 6 is found to be open, judgment is made that the purging is under operation and operation is routed to S48. If the purge valve 6 is closed, judgment is made that the purging is interrupted, and operation is routed to S45.

In S45, discrimination is made to find whether load of the hydrogen circulation device 4 detected by the load detector 7 exceeds a value of target load + given value 6. If detected load exceeds the value of target load + given value 6, operation is routed to S46 where the purge valve 6 is opened, and if not, operation is routed to S47 where the purge valve 6 is closed.

In S48, discrimination is made to find whether load of the hydrogen circulation device 4 detected by the load detector 7 exceeds the value of target load + given value 7. If detected load exceeds the value of target load + given value 7, operation is routed to S49 where the purge valve 6 is closed, and if not, operation is routed to S50 where the purge valve 6 is opened.

FIG. 25 shows the relationship between the given value 6 and the given value 7. The given value 6 is meant the load associated with the fuel cell voltage that is lowered by an allowable drop margin with respect to a reference of the fuel cell voltage at the target load that is determined in S40. Also, the given value 7 is determined as a finite difference between the target load, that is determined in S40, and the hydrogen-circulation-device load on which a timing to terminate the purging is experimentally determined.

Also, while the quantity of nitrogen appearing at the target load that is determined in S40 nearly zeroes, in actual practice, the purging is terminated before the target load is reached as shown in FIG. 25. When continued to execute the purging until the target load is reached, there is a fear that the hunting phenomenon occurs because of various conditions such as constants of the hydrogen circulation system as described in connection with the first embodiment. Therefore, the given value 7 is provided as a parameter for terminating the purging before the target load determined in S40 is reached.

With the presently filed embodiment, even in case where the rotational speed of the hydrogen circulation device is altered in dependence on stack power output, since it becomes possible to alter the purge timing depending upon the rotational speed, an advantageous effect results in reduction in the quantity of exhaust hydrogen that is unavailable for generation of electric power.

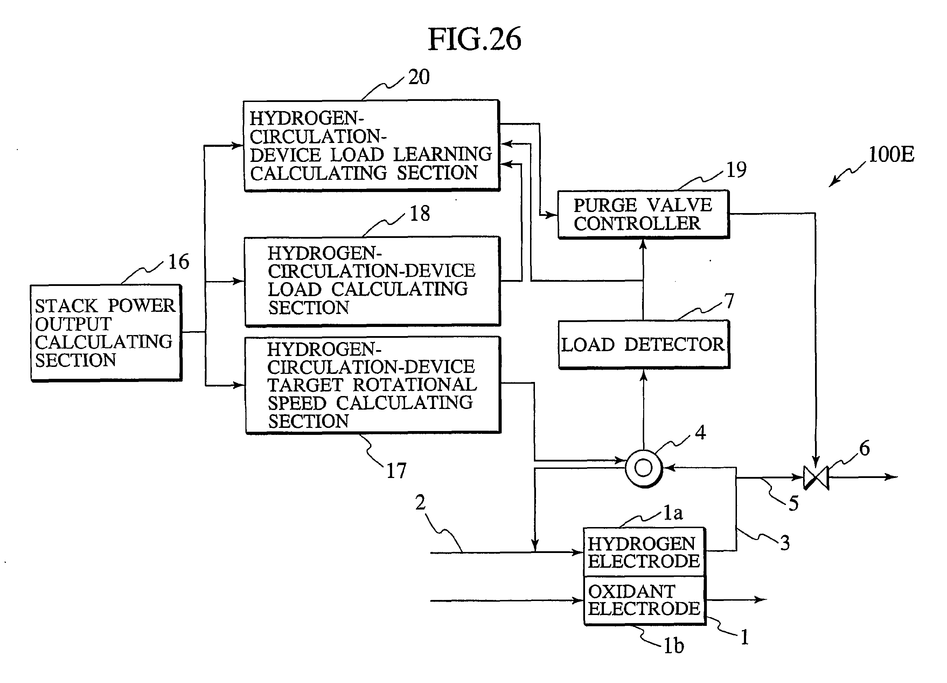

Referring to FIG 26, a fuel cell system 100E of a sixth embodiment is described. A structure of the presently filed embodiment features the provision of a hydrogen-circulation-device load learning calculating section 20, which is additionally provided to the structure of the fifth embodiment shown in FIG 19, for learning the presence of an increase in steady load of the hydrogen circulation device 4 as a result of deterioration occurring in the hydrogen circulation device 4.

Other structure is the same as that of the fifth embodiment and, so, the same component parts bear the same reference numerals to omit redundant description.

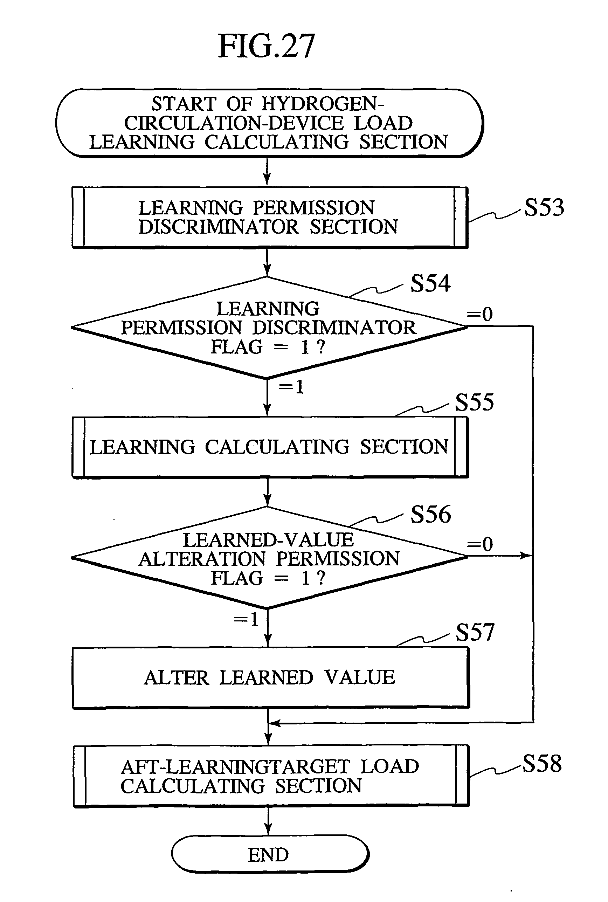

Referring to FIG 27, the hydrogen-circulation-device load learning calculating section 20, which forms an essential component part of the presently filed embodiment, is described. By "Learning" in the sixth embodiment is meant that when a status of the fuel cell 1 in which electric power is generated falls in a steady state available for the leaning to be executed, a mean load value of the hydrogen circulation device 4 is calculated and if a resulting calculated load value is greater than a learned value of load that has been already learned and stored, the learned value is altered using the resulting calculated load value.

Referring to a main flowchart shown in FIG 27, a learning permission discriminator section (a detail of which will be described later) in S53 discriminates to find whether to execute the learning, and depending upon resulting discrimination, values of learning-permission discrimination flag and learned-value-alteration permission flag are set. In succeeding S54, the value of learning-permission discrimination flag is discriminated and if the value of learning-permission discrimination flag is equal to 1, operation is routed to a learning calculating section in S55. If discrimination in S54, the value of learning-permission discrimination flag is equal to 0, no learning is permitted and operation is routed to an aft-learning target load calculating section in S58.

In the learning calculating section in S55, load of the hydrogen circulation device 4 is learned (in a manner as will be described below in detail) and, in subsequent S56, the value of learned-value-alteration permission flag is discriminated. If the value of learned-value-alteration permission flag is equal to 1, operation is routed to S57 where the learned value is altered, and operation is routed to S58. If in discrimination in S56, the value of learned-value-alteration permission flag is equal to 0, no alteration of the learned value is permitted and operation is routed to S58. In S58, the target load of the hydrogen circulation device 4 subsequent to learning operation is calculated as will be described later.

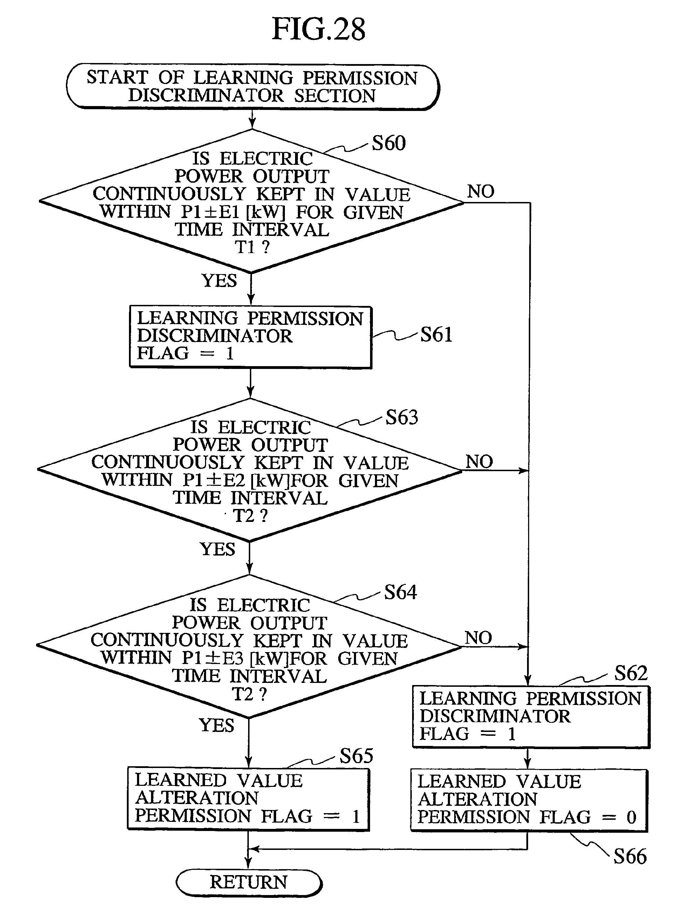

Referring to FIG 28, the content of the learning permission discriminator section is described. In order to discriminate in S60 to find whether the stack power generating status remains steady, discrimination is made to find whether a fluctuating margin of electric power output P1 continuously prevails in a value of E1 (kW) for given time interval of T1. If the fluctuating margin remains within E1 (kW) , then judgment is made that the learning is permitted and operation is routed to S61.

Further, while if T1 is set to be long, the learned value has an improved precision, the number of frequencies in which the learning is made decreases and, hence, T1 needs to be set to an appropriate value on consideration of a balance with respect to a parameter E1. On the other hand, E1 may be chosen to have the maximum value within a range that allows the fluctuating margin affecting on learning calculation to be unquestionable.

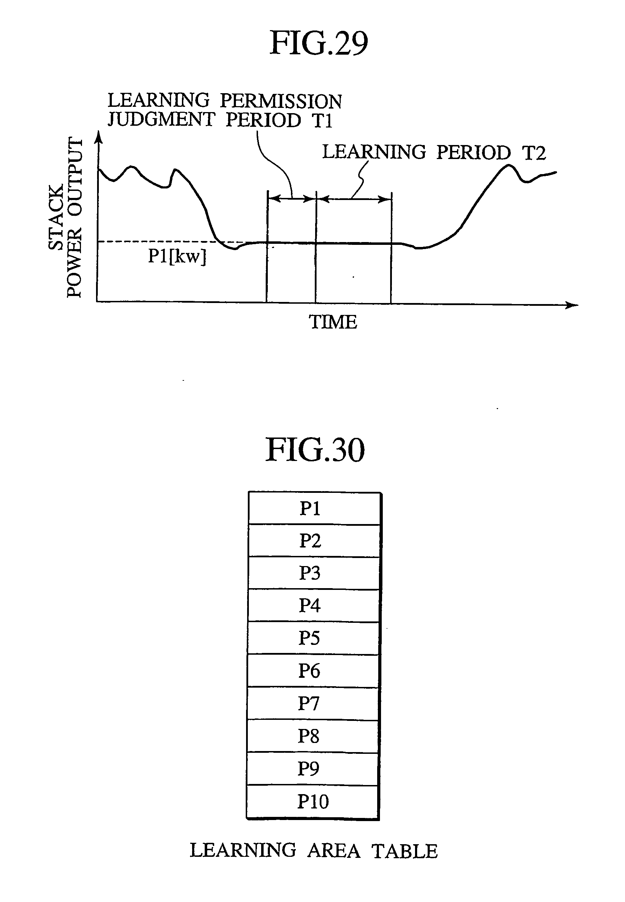

FIG 29 shows transitive variation in time of the stack power output voltage (P1) during discrimination being executed (in S60). If in judgment in S60, the fluctuating margin of electric power output exceeds E1 (kW) , discrimination is made that no steady state remains in the electric power generating condition and an unfavorable condition exists for the learning of load of the hydrogen circulation device 4 and operation is routed to S62 where learning permission discriminator flag is set to 0 whereupon in S66, learned-value-alteration permission flag is set to 0 and operation returns. In the presence of the unfavorable condition for the learning of load, operation is executed to finally calculate the target load using the result whose learning has been already finished.

If discriminate is made in S60 that the learning is permitted, operation is routed to S61 where learning permission flag is set to 1 and operation is routed to S63. In S63, discrimination is made to find whether the fluctuating margin of stack power output remains in a given range, i.e., within a value of ±E2 (kW) for given time interval of T2 that forms a learning period. If the fluctuating margin falls in the value of ± E2 (kW), then operation is routed to S64 where discrimination is made to find whether stack power output voltage remains in a value of ±E3 (V) with respect to a level of stack voltage in terms of the amount of electric power output that is preliminarily stored. If discrimination in S64, stack power output voltage remains in the given range, operation is routed to S65 where learned-value-alteration permission flag is set to 1 and operation returns. If in any of discriminations in S63 and S64, none of the fluctuating margins lies in the given value, operation is routed to S62 and no learning of load of the hydrogen circulation device 4 is executed.

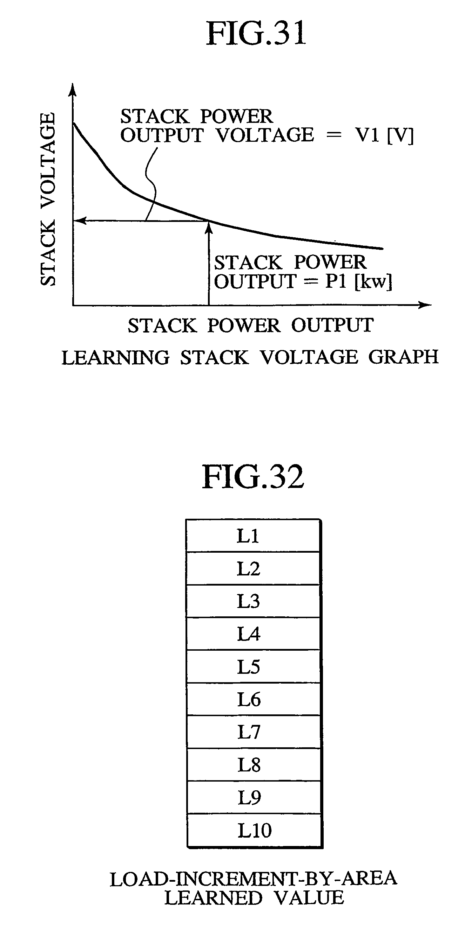

An example in which operation is executed to store stack voltage in respect of the amount of electric power output for use in judgment in S64 includes a learning-use stack voltage graph shown in FIG 31.

E2 and E3 may be set to the maximum values, respectively, which falls in a range that allows the fluctuating margins of the amount of electric power output and power output voltage to be unquestionable for a learning precision.

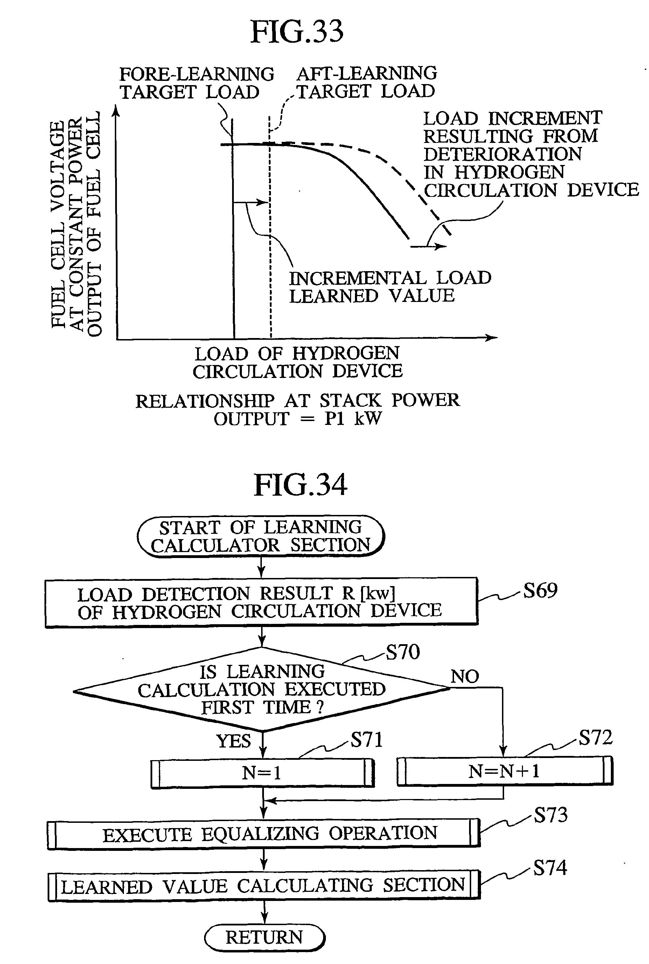

Next, a detailed content of the learning calculating section in S55 is described in connection with a flowchart of FIG 34. First, load R (kW) of the hydrogen circulation device 4 is detected in S69 and operation is executed to count the number of times the operation is repeated to detect load from commencement of the learning during a period from S70 to S72 to perform equalizing operation in S73. In subsequent S74, the learned value is calculated and operation returns.

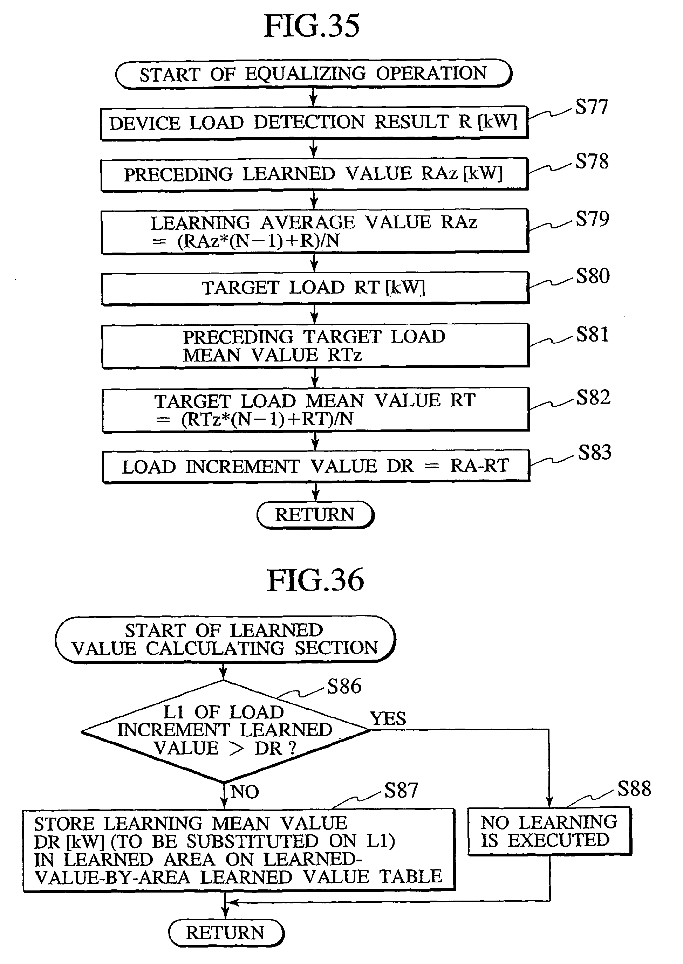

FIG 35 is a flowchart illustrating a detail of equalizing operation in S73. First, when obtaining an average in load at N-number of times during operations in S77 to S79, a product resulting from a preceding hydrogen-circulation-device load mean value RAz and current hydrogen-circulation-device load R that are weight averaged with a value of N - 1 : 1 is assigned to be a hydrogen-circulation-device mean value RA.

Likewise, in operations in S80 to S82, a mean value of target loads is obtained. And, operation is executed in S83 to calculate a finite differential DR between the hydrogen-circulation-device load mean value RA and the target load mean value RT, thereby terminating averaging operation.

FIG. 36 is a flowchart for illustrating the operational content of the learned value calculating section in S74. The presently filed embodiment takes a case where the hydrogen circulation device 4 is deteriorated accompanied by an increase in load and no learned value is altered when the load of the hydrogen circulation device 4 decreases subsequent to learning operation.

If the value resulting from learning operation already finished in S86, i.e., the learned value stored in a load increment-by-area learned value table is greater than a value DR that is calculated in current learning computation, no alteration is made on the load increment-by-area learned value table as set forth above. When this takes place, operation is routed to S88 and operation is terminated without the learned value being altered.

In contrast, if the learned value is greater than the value DR, then operation is executed in S87 to alter the load increment-by-area learned value table (see FIG. 32) and operation is terminated. Foregoing steps allow computation in S57 of FIG. 27 to be terminated, and operation is routed to S58.

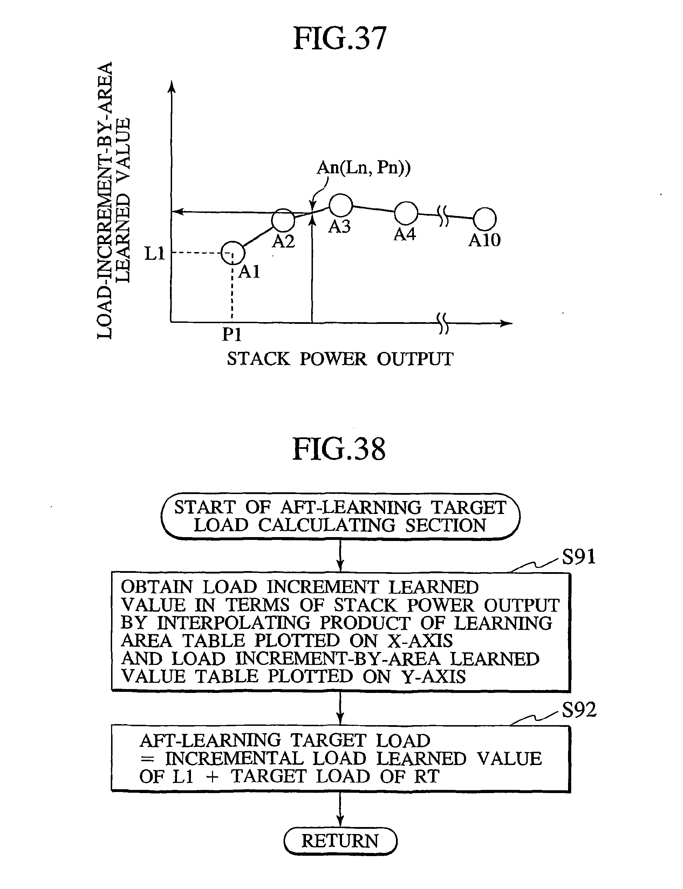

FIG. 37 is a graph wherein respective values of the learning table shown in FIG. 30 is plotted on the abscissa and the respective values of the load increment-by-area learned value table shown in FIG. 32 are plotted on the coordinate whereupon An (Pn, Ln) is plotted thereby obtaining respective points A1 and A2 through interpolation.

Next, referring to FIG. 38, the content of computation to be executed by the aft-learning target load calculating section in S58 is described. Operation is executed in S58 to calculate a target load value of the hydrogen circulation device 4 based on the load increment-by-area learned value table on which the learned value resulting from above learning computation is reflected. Operation is executed in S91 to calculate load increment-by-area referring to stack power output based on the graph shown in FIG 37. That is, in Fig. 37, load increment-by-area learned values A1 to A10 are derived by using first values P1 to P10 of the learning area table, shown in FIG. 30, plotted on the abscissa and second values L1 to L10 of the load increment-by-area learned value table, shown in FIG 32, plotted on the coordinate whereupon the values A1 to A10 are connected to one another through interpolation to form a graph shown in FIG, 37. From the graph shown in FIG 37, an incremental load learned value Ln in terms of an arbitrary stack power output Pn can be obtained.

Subsequently, operation is routed to S92 where operation is executed to obtain aft-learning target load by permitting a load increment value to be added to target load calculated in FIG 26. The foregoing steps allow computation of the hydrogen-circulation-device load learning calculating section 20 of FIG 26 to be terminated, and operation is executed to deliver art-learning target load to the purge valve controller 19. Also, the purge valve controller 19 operates to compute in the same manner as that of fifth embodiment.

With the presently filed embodiment, even if variation occurs in the relationship between load and the quantity of nitrogen as a result of fluctuation in load of the hydrogen circulation device due to deterioration thereof, such a relationship can be corrected and, so, it becomes possible to have an effect of achieving reduction in the quantity of exhaust hydrogen.

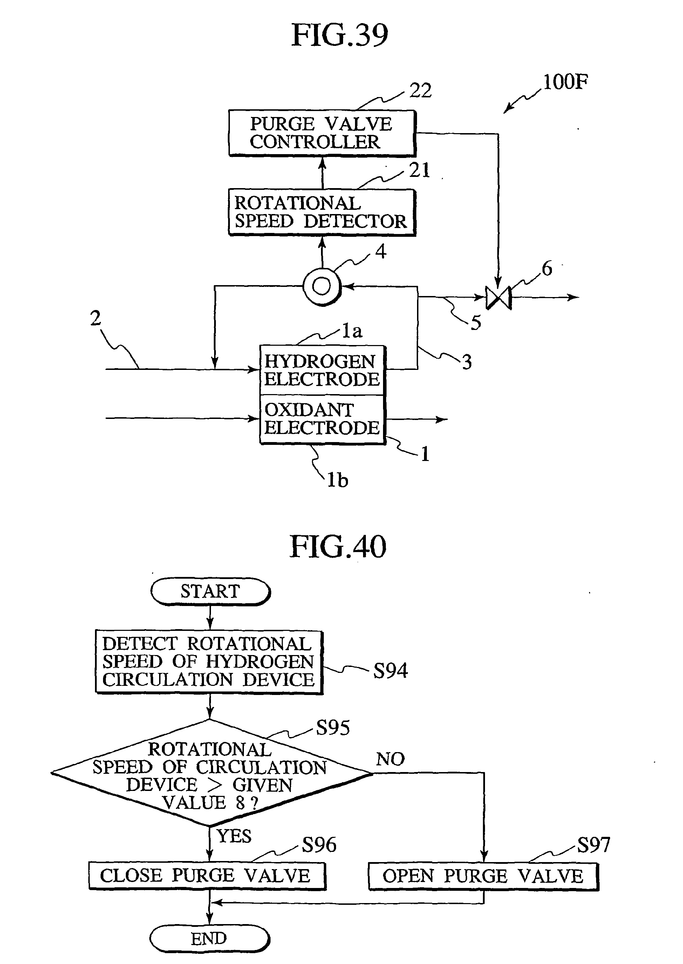

Referring to FIG. 39, description is made of a fuel cell system 100F of a seventh embodiment. As shown in FIG 39, the fuel cell system 100F is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, a rotational speed detector 21 that detects the rotational speed of the hydrogen circulation device 4, and a purge valve controller 22 that controls to open or close the purge valve 6.

The rotational speed detector 21 detects the number of revolutions (rotational speed) of the hydrogen circulation device 4 using a rotary encoder or a pickup coil, and a detected value is outputted to the purge valve controller 22.

Although no specific limitation is intended in the presently filed embodiment, the purge valve controller 22 is comprised of a microprocessor including a CPU, the ROM that stores programs and control constants, a RAM for processing, and an I/O interface. Furthermore, the rotational speed detector 21 (an input unit) and the purge valve 6 (an output unit) are connected to the purge valve controller 22 accordingly.

The rotational speed detector 21 shown in FIG 39 detects the rotational speed of the hydrogen circulation device 4 that is operated at constant load, and the purging is controlled with the purge valve controller 22.

FIG 40 is a flowchart for illustrating control operation of the purge valve controller 22.

First in S94, the rotational speed of the hydrogen circulation device 4 detected by the rotational speed detector 21 is read in, and discrimination is made in S95 to find whether the rotational speed of the hydrogen circulation device 4 exceeds the given value 7.

If the rotational speed exceeds the given value 8, then judgment is made that the discharging of impurities from the hydrogen circulation path has been terminated and mass of gas has decreased, and operation is routed to S96 where the purge valve 6 is closed. If in judgment in S95, the rotational speed is less than the given value 8, then judgment is made that nitrogen increases inside the hydrogen circulation path and operation is routed to S97 where the purge valve 6 is opened. Also, the given value 8 may be set to include the rotational speed of the hydrogen circulation device 4 at which electric power output generated by the stack begins to drop when the quantity of nitrogen is caused to increase in the hydrogen circulation device 4.

According to the presently filed embodiment, even with the fuel cell system 100F equipped with the hydrogen circulation device 4 that is operated at constant load, it becomes possible to reduce the unwanted number of times the purging is repeated.

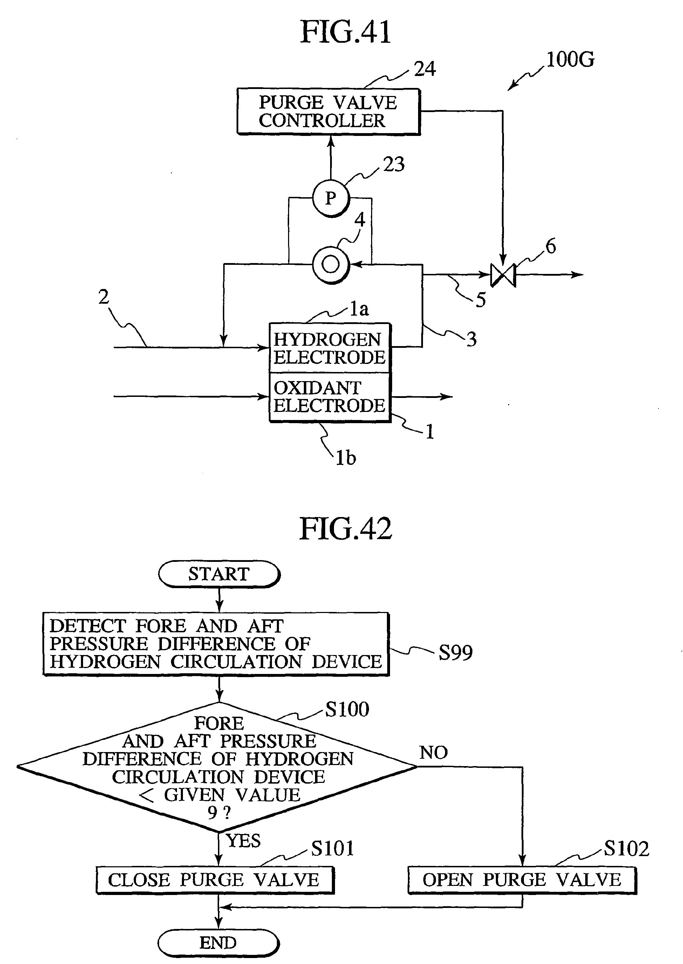

A fuel cell system 100G of an eighth embodiment is described with reference to FIG 41. Referring to FIG 41, the fuel cell system 100G is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, a pressure detector 23 that detects a pressure difference in fore and aft areas of the hydrogen circulation device 4, and a purge valve controller 24 that controls to open or close the purge valve 6.

The pressure detector 23 comprises, for example, a semiconductor pressure sensor or a thick film pressure sensor that is possible to electrically detect distortion of a diaphragm to convert it to pressure.

Although no specific limitation is intended in the presently filed embodiment, the purge valve controller 24 is comprised of a microprocessor including a CPU, a ROM that stores programs and control constants, a RAM for processing, and an I/O interface.
Additionally, the pressure detector 23 (an input unit) to detect the pressure difference in the fore and aft areas of the hydrogen circulation device 4 and the purge valve 6 (an output unit) are connected to the purge valve controller 24, respectively.

FIG. 42 is a flowchart for illustrating control operation of the purge valve controller 24. First, the fore and aft pressure difference of the hydrogen circulation device 4 detected in S99 by the pressure detector 23 is read in. Subsequently, discrimination is made in S100 to find whether the fore and aft pressure difference of the hydrogen circulation device 4 exceeds the given value 9.

If the fore and aft pressure difference exceeds the given value 9, then judgment is made that nitrogen inside the hydrogen circulation path has increased and operation is routed to S102 where the purge valve 6 is opened. If the pressure difference is less than the given value 9, operation is routed to S101 where the purge valve 6 is closed. Also, the given value 9 may be set to include a fore and aft differential pressure of the hydrogen circulation device at which electric power output generated by the stack begins to drop when the quantity of nitrogen in the hydrogen circulation device 4 is caused to increase.

With the presently filed embodiment, an advantageous effect resides in that merely additional provision of only the pressure detector 23 that can be easily installed enables load of the hydrogen circulation device 4 to be detected for executing purging control.

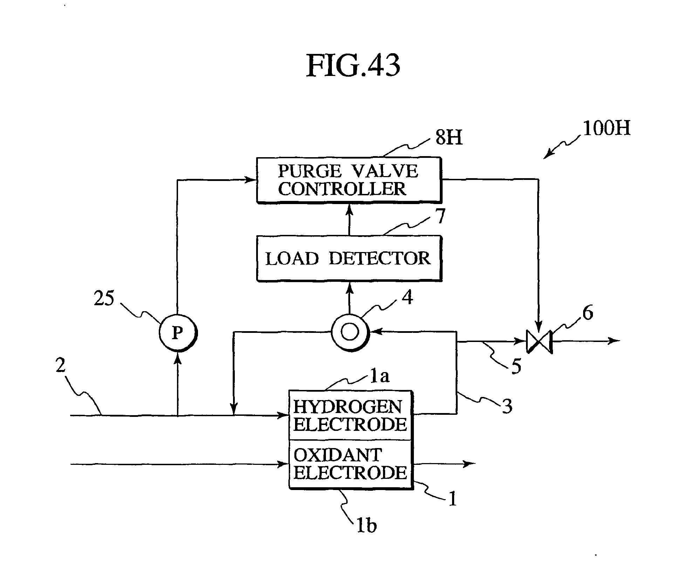

A fuel cell system 100H of a ninth embodiment is described with reference to FIG 43. Referring to FIG 43, the fuel cell system 100H is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, the load detector 7 that detects load of the hydrogen circulation device 4, a pressure detector 25 that detects pressure in the hydrogen gas supply passage 2, and a purge valve controller 8H that controls to open or close the purge valve 6.

The load detector 7 detects load of the hydrogen circulation device 4 in terms of torque detected by the torque sensor, and electric power consumption and electric current consumption of the hydrogen circulation device 4, and a detected value is outputted to the purge valve controller 8H.

The pressure detector 25 comprises such as the semiconductor pressure sensor or the thick film pressure sensor whereby electrically detect distortion of the diaphragm to convert it to pressure.

Although no specific limitation is intended in the presently filed embodiment, the purge valve controller 8H is comprised of a microprocessor including a CPU, a ROM that stores programs and control constants, a RAM for processing, and a I/O interface.
Additionally, the load detector 7 and the pressure detector 25 both of which serve as input units and the purge valve 6 (an output unit) are connected to the purge valve controller 8H accordingly.

The presently filed embodiment serves to operate such that the pressure detector 25 detects pressure in the hydrogen gas supply passage 2 that would influence on internal pressure of the hydrogen circulation path and detected pressure is used for correcting pressure inside the hydrogen circulation path whereby a given load value of the hydrogen circulation device 4 for discriminating whether to start or terminate the purging in dependence on pressure inside the hydrogen circulation path subsequent to correction of pressure.

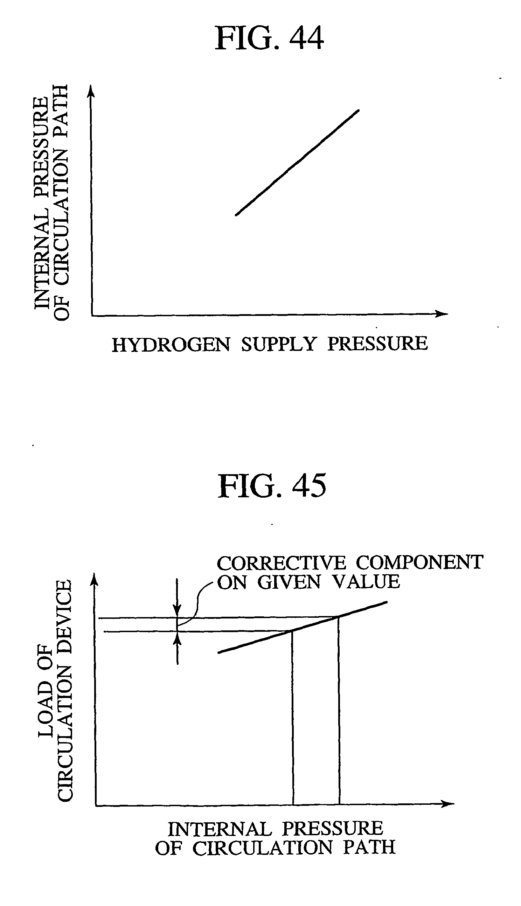

FIG 44 is a view illustrating the relationship between hydrogen supply pressure representing pressure in the hydrogen supply passage 2, and internal pressure inside the circulation path representing output pressure of the hydrogen circulation passage 3. As shown in FIG 44, as hydrogen supply pressure increases, pressure increases at the outlet of the hydrogen circulation passage 3. This results in an increase in outlet pressure of the hydrogen circulation device 4 and, hence, a density of hydrogen gas circulating through the hydrogen circulation device 4 increases with a resultant increase in load of the hydrogen circulation device 4. Accordingly, the relationship between load of the hydrogen circulation device 4 and outlet pressure thereof varies as shown in FIG. 45.

Therefore, a corrective component (an offset) as shown in FIG. 45 is added in surplus to the given value for use in discriminating load of the hydrogen circulation device 4 in the presently filed embodiment. This given value is meant the given value that is used for discriminating whether to open or close the purge valve 6 in a manner as shown in S2 in FIG. 2. This enables control to be executed to open or close the purge valve 6 by excluding influence caused by fluctuation in load of the hydrogen circulation device 4 resulting from variation in hydrogen supply pressure.

With the presently filed embodiment, it becomes possible to reduce the number of times the purging operation is repeated even in the fuel cell system where hydrogen supply pressure is altered depending upon operating conditions.

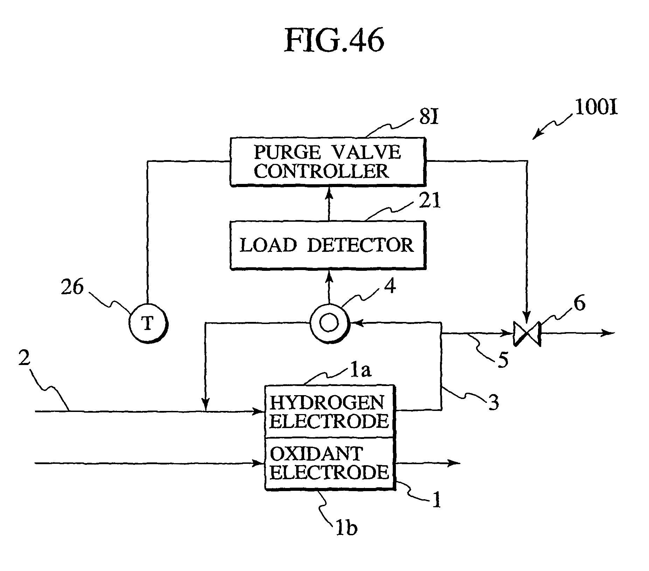

A fuel cell system 100I of a tenth embodiment is described with reference to FIG 46. As shown in FIG 46, the fuel cell system 100I is comprised of the fuel cell 1 having the hydrogen electrode 1a and the oxidant electrode 1b, the hydrogen gas supply passage 2 through which hydrogen is supplied to the hydrogen electrode 1a, the hydrogen gas circulation passage 3 forming the path through which hydrogen gas is circulated from the outlet of the hydrogen electrode 1a to the inlet thereof, the hydrogen circulation device 4 including the pump that circulates hydrogen gas from the outlet of the hydrogen electrode 1a to the inlet thereof through the hydrogen circulation passage 3, the purge passage 5 through which the hydrogen gas circulation passage 3 is in communication with the outside, the purge valve 6 that opens or closes the purge passage 5, the load detector 7 that detects load of the hydrogen circulation device 4, a temperature detector 26 that detects a temperature of the hydrogen gas circulation passage 3 or an ambient temperature, and a purge valve controller 8I that controls to open or close the purge valve 6.

The load detector 7 detects load of the hydrogen circulation device 4 in terms of torque detected by the torque sensor, and electric power consumption and electric current consumption of the hydrogen circulation device 4, and a detected value is outputted to the purge valve controller 8I.

Although no specific limitation is intended in the presently filed embodiment, the purge valve controller 8I is comprised of a microprocessor including a CPU, the ROM that stores programs and control constants, a RAM for processing, and an I/O interface. The load detector 7 and the temperature detector 26 both of which serve as input units and the purge valve 6 that serves as an output unit are connected to the valve controller 8I accordingly.

The presently filed embodiment serves to operates such that steam partial pressure, prevailing in the hydrogen circulation path, fluctuating depending upon the temperature of the hydrogen gas circulation passage is taken into consideration and the temperature of the hydrogen gas circulation passage or the ambient temperature are detected to allow resulting detected temperature to be used for correcting the given value to be used for discriminating load of the hydrogen circulation device 4.

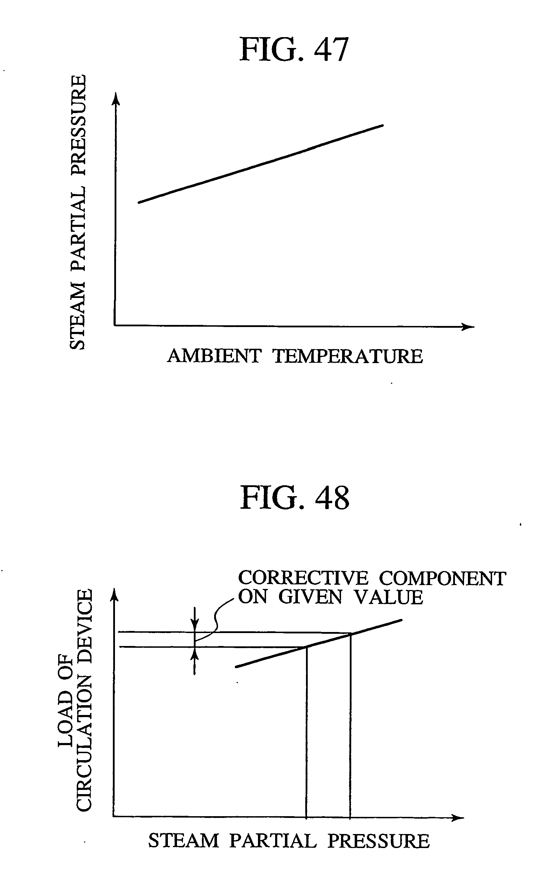

As shown in FIG. 47, as the ambient temperature increases, steam partial pressure in exhaust hydrogen humidified in the hydrogen electrode 1a increases. This results in an increase in a gas density in or in pressure of the hydrogen circulation path and, hence, the amount of work to be done by the hydrogen circulation device 4 increases.
Therefore, the relationship between load of the hydrogen circulation device 4 and steam partial pressure varies as shown in FIG. 48. In order to exclude influence resulting from fluctuation in steam partial pressure caused by temperature variations during control of the purge valve 6, the surplus corrective component (the offset) as shown in FIG. 48 is added to the given value to be used for judgment. And, by using the corrected given value, operation is executed to discriminate whether to perform purge control in a manner as shown by S2 in FIG 2.

With the presently filed embodiment, due to the presence of the relationship between the temperature of supplied hydrogen and the steam partial pressure in the hydrogen circulation path taken into consideration, since the fluctuation in load of the hydrogen circulation device 4 can be excluded by correction, it becomes possible to optimize the number of times the purging is repeated.

According to the present teaching, since the purging can be performed depending upon an amount of nitrogen that is accumulated in a hydrogen circulation path, an advantageous effect resides in a capability of reducing the number of times the purging is repeated for thereby preventing hydrogen gas fuel from being wastefully exhausted to provide an improved fuel conservation performance of a fuel cell.

## Claims

1. A fuel cell arrangement comprising:
a fuel cell body having a hydrogen electrode and an oxidant electrode supplied with hydrogen gas and oxidant gas, respectively, for generating electric power;
a hydrogen supply passage supplying the hydrogen gas to an inlet of the hydrogen electrode;
a hydrogen circulation passage circulating exhaust hydrogen gas expelled from an outlet of the hydrogen electrode to the inlet of the hydrogen electrode;
a hydrogen circulation device controlled to operate at a fixed operating speed and through which the exhaust hydrogen is circulated;
a purge passage discharging the exhaust hydrogen gas expelled from at least one of the outlet of the hydrogen electrode and the hydrogen circulation passage to an outside;
a purge valve opening or closing the purge passage;
a purge valve controller controlling to open or close the purge valve depending upon at least one of load of and rotational speed of the hydrogen circulation device; and
a load detector detecting the load of the hydrogen circulation device, wherein the purge valve controller controls the purge valve based on operating load, detected by the load detector, of the hydrogen circulation device during steady operation thereof which is non-transitional.

2. The fuel cell arrangement according to claim 1, wherein the purge valve controller includes:
a purge start control section executing control such that discrimination is made that nitrogen concentration in the hydrogen circulation passage increases when the operating load detected by the load detector exceeds a first given value, thereby opening the purge valve; and
a purge end control section executing control such that the purge valve is closed when the operating load detected by the load detector decreases below a second given value less than the first given value.

3. The fuel cell arrangement according to claim 1, wherein the purge valve controller estimates a quantity of nitrogen prevailing in the hydrogen circulation passage depending upon a detected result of the load detector and controls to open or close the purge valve in response to an estimated quantity of nitrogen.

4. The fuel cell arrangement according to claim 1, further comprising:
a hydrogen concentration detector detecting a hydrogen concentration close proximity to an outlet of the purge passage, and
wherein the purge valve controller calculates a timing at which the purge valve is closed, depending upon the hydrogen concentration detected by the hydrogen concentration detector.

5. The fuel cell arrangement according to claim 1, wherein the purge valve controller includes:
a power output calculating section calculating electric power output generated by the fuel cell body;
a hydrogen-circulation-device target rotational speed calculating section calculating a target rotational speed of the hydrogen circulation device based on resulting power output calculated by the power output calculating section; and
a hydrogen-circulation-device target load calculating section calculating a target load of the hydrogen circulation device based on the resulting power output calculated by the power output calculating section.

6. The fuel cell arrangement according to claim 5, wherein the purge valve controller comprises:
a load learning calculating section learning the presence of an increase in steady load resulting from secular variation in the hydrogen circulation device;
a hydrogen-circulation-device target load calculating section calculating a target load of the hydrogen circulation device based on a learned steady load and a power output generated by the fuel cell body.

7. The fuel cell arrangement according to claim 1, further comprising:
a revolution detector detecting a rotational speed of the hydrogen circulation device; and
wherein the purge valve controller controls the purge valve based on the rotational speed, detected by the revolution detector, of the hydrogen circulation device operating under a constant load.

8. The fuel cell arrangement according to claim 1, wherein the purge valve controller controls the purge valve based on a pressure difference between fore and aft areas of the hydrogen circulation device.

9. The fuel cell arrangement according to claim 1, wherein the purge valve controller corrects at least one of an opening timing and a closing timing of the purge valve based on variation in supplied hydrogen pressure.

10. The fuel cell arrangement according to claim 1, wherein the purge valve controller corrects at least one of an opening timing and a closing timing of the purge valve based on at least one of a temperature of supplied hydrogen and an ambient temperature.

11. A method of controlling a purge valve in a fuel cell arrangement in which exhaust hydrogen is circulated in a hydrogen circulation device and the hydrogen gas is expelled from the purge valve,
the method comprising:
detecting at least one of the load of and rotation speed of the hydrogen circulation device; and
controlling to open or close the purge valve based on the at least one of detected the load and the speed.

## Patentansprüche

1. Brennstoffzellenanordnung, aufweisend:
einen Brennstoffzellenkörper mit einer Wasserstoffelektrode und einer Oxidationsmittelelektrode, jeweils versorgt mit Wasserstoffgas und Oxidationsmittelgas zum Erzeugen von Elektroenergie;
einen Wasserstoffzuführungskanal, der das Wasserstoffgas zu einem Einlass der Wasserstoffelektrode zuführt;
einen Wasserstoffzirkulationskanal, der Wasserstoffabgas, ausgestoßen von einem Auslass der Wasserstoffelektrode zu dem Einlass der Wasserstoffelektrode zirkuliert;
eine Wasserstoffzirkulationsvorrichtung, gesteuert, um mit einer festen Arbeitsgeschwindigkeit zu arbeiten und durch die das Abgaswasserstoffgas zirkuliert wird; einen Reinigungskanal, der das Wasserstoffabgas, ausgestoßen von zumindest einem von Auslaß der Wasserstoffelektrode oder Wasserstoffzirkulationskanal, nach außen abgibt;
ein Reinigungsventil, das den Reinigungskanal öffnet oder schließt;
eine Reinigungsventilsteuerung, die das Öffnen oder Schließen des Reinigungsventiles in Abhängigkeit von zumindest einem von Last oder Drehzahl der Wasserstoffzirkulationsvorrichtung steuert; und
einen Lastdetektor, der die Belastung der Wasserstoffzirkulationsvorrichtung erfasst, wobei die Reinigungsventilsteuerung das Reinigungsventil auf der Grundlage der Betriebslast der Wasserstoffzirkulationsvorrichtung während des stabilen Betriebs derselben, der kein Übergangsbetrieb ist, steuert.

2. Brennstoffzellenanordnung nach Anspruch 1, wobei die Reinigungsventilsteuerung enthält:
einen Reinigungsstartsteuerungsabschnitt, der die Steuerung derart ausführt, dass eine Feststellung vorgenommen wird, dass sich eine Stickstoffkonzentration in dem Wasserstoffzirkulationskanal erhöht, wenn die Betriebslast, erfasst durch den Lastdetektor, einen ersten gegebenen Wert überschreitet, um **dadurch** das Reinigungsventil zu öffnen; und
einen Reinigungsendsteuerungsabschnitt, der eine Steuerung derart ausführt, dass das Reinigungsventil geschlossen wird, wenn sich die Betriebslast, erfasst durch den Lastdetektor, unter einen zweiten gegebenen Wert vermindert, der geringer als der erste gegebene Wert ist.

3. Brennstoffzellenanordnung nach Anspruch 1, wobei die Reinigungsventilsteuerung eine Stickstoffmenge abschätzt, die in dem Wasserstoffzirkulationskanal in Abhängigkeit von dem erfassten Ergebnis des Lastdetektors herrscht, und steuert, um das Reinigungsventil in Abhängigkeit von einer abgeschätzten Stickstoffmenge zu öffnen oder zu schließen.

4. Brennstoffzellenanordnung nach Anspruch 1, außerdem aufweisend:
einen Wasserstoffkonzentrationsdetektor, der eine Wasserstoffkonzentration in großer Nähe zu einem Auslass des Reinigungskanals erfasst; und
wobei die Reinigungsventilsteuerung einen Zeitpunkt berechnet, bei dem das Reinigungsventil in Abhängigkeit von der Wasserstoffkonzentration, erfasst durch den Wasserstoffkonzentrationsdetektor, geschlossen wird.

5. Brennstoffzellenanordnung nach Anspruch 1, wobei die Reinigungsventilsteuerung enthält:
einen Energieabgabe- Berechnungsabschnitt, der die durch den Brennstoffzellenkörper erzeugte elektrische Energie berechnet;
einen Wasserstoff- Zirkulations- Vorrichtungs- Ziel- Drehzahl-Berechnungsabschnitt, der eine Ziel- Drehzahl der Wasserstoffzirkulationsvorrichtung auf der Grundlage der resultierenden Energieabgabe, berechnet durch den Energieabgabe- Berechnungsabschnitt, berechnet; und
einen Wasserstoff- Zirkulations- Vorrichtungs- Ziel- Last- Berechnungsabschnitt, der eine Ziel- Last der Wasserstoffzirkulationsvorrichtung auf der Grundlage der resultierenden Energieabgabe, berechnet durch den Energieabgabe- Berechnungsabschnitt, berechnet.

6. Brennstoffzellenanordnung nach Anspruch 5, wobei die Reinigungsventilsteuerung aufweist: '
einen Last- Lern- Berechnungsabschnitt, der die Anwesenheit einer Erhöhung bei stabiler Last lernt, resultierend aus der diesseitigen Veränderung in der Wasserstoffzirkulationsvorrichtung;
einen Wasserstoff- Zirkulations- Vorrichtungs- Ziel- Last- Berechnungsabschnitt, der eine Ziel- Last der Wasserstoffzirkulationsvorrichtung auf der Grundlage einer erlernten stabilen Last und einer Energieabgabe, erzeugt durch den Brennstoffzellenkörper, berechnet.

7. Brennstoffzellenanordnung nach Anspruch 1, außerdem aufweisend:
einen Drehzahlerfasser, der eine Drehzahl der Wasserstoffzirkulationsvorrichtung erfasst; und
wobei die Reinigungsventilsteuerung das Reinigungsventil auf der Grundlage der Drehzahl der Wasserstoffzirkulationsvorrichtung, erfasst durch den Drehzahlerfasser, steuert, die unter einer konstanten Last arbeitet.

8. Brennstoffzellenanordnung nach Anspruch 1, wobei die Reinigungsventilsteuerung das Reinigungsventil auf der Grundlage einer Druckdifferenz zwischen Bereichen vor und hinter der Wasserstoffzirkulationsvorrichtung steuert.

9. Brennstoffzellenanordnung nach Anspruch 1, wobei die Reinigungsventilsteuerung zumindest einen von Öffnungszeitpunkt oder Schließzeitpunkt des Reinigungsventils auf der Grundlage einer Veränderung des zugeführten Wasserstoffdruckes korrigiert.

10. Brennstoffzellenanordnung nach Anspruch 1, wobei die Reinigungsventilsteuerung zumindest einen von Öffnungszeitpunkt oder Schließzeitpunkt des Reinigungsventils auf der Grundlage von zumindest einem von Temperatur des zugeführten Wasserstoffs oder Umgebungstemperatur korrigiert.

11. Verfahren zum Steuern eines Reinigungsventils in einer Brennstoffzellenanordnung, in der der Abgaswasserstoff in einer Wasserstoffzirkulationsvorrichtung zirkuliert wird und das Wasserstoffgas von dem Reinigungsventil ausgestoßen wird, wobei das Verfahren aufweist:
Erfassen von zumindest einem von Last oder Drehzahl der Wasserstoffzirkulationsvorrichtung; und
Steuern, um das Reinigungsventil auf der Grundlage von zumindest einem von erfasster Last oder Drehzahl zu öffnen oder zu schließen.

## Revendications

1. Agencement de pile à combustible comprenant :
un corps de pile à combustible comportant une électrode d'hydrogène et une électrode d'oxydant alimentées en hydrogène gazeux et en gaz oxydant, respectivement, pour générer de l'énergie électrique ;
un passage d'alimentation en hydrogène délivrant l'hydrogène gazeux à un orifice d'entrée de l'électrode d'hydrogène ;
un passage de circulation d'hydrogène pour faire circuler l'hydrogène gazeux d'échappement expulsé d'un orifice de sortie de l'électrode d'hydrogène vers l'orifice d'entrée de l'électrode d'hydrogène ;
un dispositif de circulation d'hydrogène commandé pour fonctionner à une vitesse de fonctionnement fixe et à travers lequel l'hydrogène d'échappement circule ;
un passage de purge déchargeant l'hydrogène gazeux d'échappement expulsé d'au moins l'un de l'orifice de sortie de l'électrode d'hydrogène et du passage de circulation d'hydrogène à l'extérieur ;
une vanne de purge pour ouvrir ou fermer le passage de purge ;
un contrôleur de vanne de purge commandant l'ouverture ou la fermeture de la vanne de purge en fonction d'au moins l'une d'une charge et d'une vitesse de rotation du dispositif de circulation d'hydrogène ; et
un détecteur de charge détectant la charge du dispositif de circulation d'hydrogène, dans lequel le contrôleur de vanne de purge commande la vanne de purge sur la base de la charge de fonctionnement, détectée par le détecteur de charge, du dispositif de circulation d'hydrogène pendant le fonctionnement en régime permanent de celui-ci qui est non transitoire.

2. Agencement de pile à combustible selon la revendication 1, dans lequel le contrôleur de vanne de purge comprend :
une section de commande de début de purge exécutant la commande de sorte qu'il soit discriminé que la concentration en azote dans le passage de circulation d'hydrogène augmente lorsque la charge de fonctionnement détectée par le détecteur de charge dépasse une première valeur donnée, ouvrant de ce fait la vanne de purge ; et
une section de commande de fin de purge exécutant la commande de sorte que la vanne de purge soit fermée lorsque la charge de fonctionnement détectée par le détecteur de charge diminue au-dessous d'une deuxième valeur donnée inférieure à la première valeur donnée.

3. Agencement de pile à combustible selon la revendication 1, dans lequel le contrôleur de vanne de purge estime une quantité d'azote actuelle dans le passage de circulation d'hydrogène en fonction d'un résultat détecté du détecteur de charge et commande l'ouverture ou la fermeture de la vanne de purge en réponse à une quantité d'azote estimée.

4. Agencement de pile à combustible selon la revendication 1, comprenant en outre :
un détecteur de concentration en hydrogène détectant une concentration en hydrogène à proximité immédiate d'un orifice de sortie du passage de purge ; et
dans lequel le contrôleur de vanne de purge calcule un moment auquel la vanne de purge est fermée, en fonction de la concentration en hydrogène détectée par le détecteur de concentration en hydrogène.

5. Agencement de pile à combustible selon la revendication 1, dans lequel le contrôleur de vanne de purge comprend :
une section de calcul de sortie de puissance calculant la sortie de puissance électrique générée par le corps de pile à combustible ;
une section de calcul de vitesse de rotation cible de dispositif de circulation d'hydrogène calculant une vitesse de rotation cible du dispositif de circulation d'hydrogène sur la base de la sortie de puissance résultante calculée par la section de calcul de sortie de puissance ; et
une section de calcul de charge cible de dispositif de circulation d'hydrogène calculant une charge cible du dispositif de circulation d'hydrogène sur la base de la sortie de puissance résultante calculée par la section de calcul de sortie de puissance.

6. Agencement de pile à combustible selon la revendication 5, dans lequel le contrôleur de vanne de purge comprend :
une section de calcul d'apprentissage de charge apprenant la présence d'une augmentation de la charge permanente résultant d'une variation séculaire dans le dispositif de circulation d'hydrogène ;
une section de calcul de charge cible de dispositif de circulation d'hydrogène calculant une charge cible du dispositif de circulation d'hydrogène sur la base d'une charge permanente apprise et d'une sortie de puissance générée par le corps de pile à combustible.

7. Agencement de pile à combustible selon la revendication 1, comprenant en outre :
un détecteur de rotation détectant une vitesse de rotation du dispositif de circulation d'hydrogène ; et
dans lequel le contrôleur de vanne de purge commande la vanne de purge sur la base de la vitesse de rotation, détectée par le détecteur de rotation, du dispositif de circulation d'hydrogène fonctionnant sous une charge constante.

8. Agencement de pile à combustible selon la revendication 1, dans lequel le contrôleur de vanne de purge commande la vanne de purge sur la base d'une différence de pression entre les zones avant et arrière du dispositif de circulation d'hydrogène.

9. Agencement de pile à combustible selon la revendication 1, dans lequel le contrôleur de vanne de purge corrige au moins l'un d'un moment d'ouverture et d'un moment de fermeture de la vanne de purge sur la base de la variation de la pression d'hydrogène délivrée.

10. Agencement de pile à combustible selon la revendication 1, dans lequel le contrôleur de vanne de purge corrige au moins l'un d'un moment d'ouverture et d'un moment de fermeture de la vanne de purge sur la base d'au moins l'une d'une température de l'hydrogène délivré et d'une température ambiante.

11. Procédé de commande d'une vanne de purge dans un agencement de pile à combustible, dans lequel l'hydrogène d'échappement circule dans un dispositif de circulation d'hydrogène et l'hydrogène gazeux est expulsé par la vanne de purge,
le procédé comprenant les étapes consistant à :
détecter au moins l'une de la charge et de la vitesse de rotation du dispositif de circulation d'hydrogène ; et
commander l'ouverture ou la fermeture de la vanne de purge sur la base de ladite au moins une de la charge et de la vitesse détectées.
